# EUROPÄISCHE PATENTANMELDUNG

(11) **EP 3 300 961 A1**
(43) Veröffentlichungstag der Anmeldung: **04.04.2018**
(21) Anmeldenummer: 17198763.9
(22) Anmeldetag: 29.09.2009
(51) Int. Cl.: B60R 21/264

(54) **GASGENERATOR, VERFAHREN ZU SEINER HERSTELLUNG SOWIE MODUL MIT GASGENERATOR**

(30) Priorität: 30.09.2008 DE 102008049652; 30.09.2008 DE 102008049650
(62) Teilanmeldung aus: 09778758.4
(71) Anmelder: TRW Airbag Systems GmbH, 84544 Aschau am Inn (DE)
(72) Erfinder: Bierwirth, Sebastian, 83562 Rechtmehring (DE); Hofmann, Achim, 84577 Tüßling (DE); Neumayer, Hans-Peter, 84539 Ampfing (DE); Spitzenberger, Dieter, 84559 Kraiburg (DE); Fürstenberger, Franz, 84574 Taufkirchen (DE); Nuiding, Hannes, 73667 Kaisersbach (DE); Leier, Dieter, 83527 Haag (DE); Schönhuber, Georg, 84565 Oberneukirchen (DE); Friedrich Dr., Jörg, 84564 Oberbergkirchen (DE)
(74) Vertreter: ZF TRW Patentabteilung

(57) **Zusammenfassung**

Gasgenerator (10), insbesondere für eine Schutzeinrichtung in einem Fahrzeug, mit einem Anzünder (28), der eine einen Kunststoff enthaltende Anzünderkappe hat, und der wenigstens teilweise von einer Kunststoffumspritzung umgeben ist, wobei das Material der Anzünderkappe (36) und das Material der Kunststoffumspritzung so gewählt sind, dass während des Umspritzens die Anzünderkappe wenigstens teilweise mit der Kunststoffumspritzung verschmilzt.

## Beschreibung

Die Erfindung betrifft einen Gasgenerator, insbesondere für eine Schutzeinrichtung in einem Fahrzeug, sowie ein mit einem Gasgenerator ausgestattetes Modul. Ferner betrifft die Erfindung ein Verfahren zum Herstellen eines Gasgenerators.

Gasgeneratoren für Schutzeinrichtungen in einem Fahrzeug treiben z.B. Teile (Aufstellen von Motorhauben, Straffen des Gurtes, Verschieben von Polstern oder dergleichen) an oder blasen Gassäcke auf.

Ein solcher Gasgenerator weist in der Regel einen Anzünder auf. Es ist wichtig, dass der Anzünder fest und dicht im Gasgenerator angeordnet ist und dies auch über die gesamte Lebensdauer des Gasgenerators bleibt.

Erfindungsgemäß wird eine Lösung für diese Aufgabe geschaffen, indem der Gasgenerator, gemäß der zuvor beschriebenen Art, einen Anzünder aufweist, der eine einen Kunststoff enthaltende Anzünderkappe hat, und der wenigstens teilweise von einer Kunststoffumspritzung umgeben ist, wobei das Material der Anzünderkappe und das Material der Kunststoffumspritzung so gewählt sind, dass während des Umspritzens die Anzünderkappe wenigstens teilweise mit der Kunststoffumspritzung verschmilzt, d.h., ein Anschmelzen der Kappe ist hierbei mit umfasst.

Auf diese Weise wird eine besonders dichte und feste Verbindung zwischen der Kunststoffumspritzung und dem Anzünder erreicht.

Die Anzünderkappe kann dabei ein Bestandteil des Anzünders selbst sein, der vorzugsweise vorgefertigt geliefert wird, oder kann ein separates Bauteil sein, das auf den Anzünder aufgesetzt wird, bevor dieser umspritzt wird.

Vorzugsweise bestehen die Anzünderkappe und die Kunststoffumspritzung aus dem gleichen Material. Dieses Material kann Glasfasern enthalten, vorzugsweise ist der Glasfaseranteil etwa 20 - 40 Gew.-% und besonders bevorzugt liegt er bei etwa 30%.

Die Kunststoffumspritzung des Anzünders bildet vorteilhaft den Sockel, mit dem der Anzünder mit dem Außengehäuse verbunden ist. Es könnte aber auch ein anderes Bauteil sein, das letztendlich seinerseits mit dem Außengehäuse verbunden ist, um den Anzünder mit dem Außengehäuse fest zu verbinden. In anderen Worten weist der Gasgenerator ein Außengehäuse auf und der Anzünder ist mittels der Kunststoffumspritzung mit dem Außengehäuse verbunden.

Vorzugsweise weist das Außengehäuse eine Öffnung auf, und die Kunststoffumspritzung ist an den Rand der Öffnung angespritzt, insbesondere um das Außengehäuse nach außen abzuschließen.
Des Weiteren liegt der Erfindung die Aufgabe zu Grunde, ein Modul mit einem Gasgenerator, einem von dem Gasgenerator aufblasbarem Gassack und einer Befestigungseinrichtung zur Anbringung des Moduls, insbesondere im Innenbereich eines Fahrzeuges, derart zu verbessern, dass dessen Herstellungskosten reduziert werden können.

Diese Aufgabe wird für ein solches Modul erfindungsgemäß dadurch gelöst, dass der Gasgenerator nach zumindest einem der Ansprüche 1 bis 6 ausgebildet ist.

Gasgeneratoren müssen über viele Jahre für den singulären Einsatz funktionsfähig sein, das heißt, sie können in dieser Zeit hohen Anforderungen ausgesetzt sein, was Beständigkeit gegenüber Umwelteinflüssen wie Feuchteeintritt oder Korrosion angeht.

Gasgeneratoren bestehen aus mehreren miteinander verbundenen Teilen. Zwischen aneinanderstoßenden Teilen besteht das Erfordernis einer auch über viele Jahre hinweg zuverlässigen Verbindung als Schutz gegen äußere Umwelteinflüsse.

Die Erfindung sieht gemäß einem Aspekt einen Gasgenerator insbesondere gemäß der zuvor und/ oder nachstehend beschriebenen Art vor, bei dem im Bereich aneinanderstoßender Teile ein Dichtmittel auf die Teile aufgebracht ist, insbesondere ein Dichtmittel, das auf beiden aneinanderstoßenden Teilen haftet. Dieses Dichtmittel ist vorzugsweise ein zusätzliches Mittel, welches der Dichtigkeit dient und nicht das einzige Verbindungsmittel zwischen den aneinanderstoßenden Teilen.

Das Dichtmittel übernimmt vorzugsweise keine mechanische oder adhäsive Haltefunktion zwischen den aneinanderstoßenden Teilen, die anderweitig miteinander verbunden sind. Das heißt, der Gasgenerator ist auch ohne Dichtmittel so ausgelegt, dass die aneinanderstoßenden Teile lagefest positioniert sind.

Durch Haften des Dichtmittels an beiden aneinanderstoßenden Teilen wird vermieden, dass Feuchtigkeit in das Innere des Gasgenerators eindringen kann.

Die aneinanderstoßenden Teile, an denen das Dichtmittel aufgebracht ist, bilden jeweils zumindest einen Teil der äußeren Gasgeneratoroberfläche bilden und/ oder sind insbesondere aus unterschiedlichen Materialien. Die bevorzugte Ausführungsform sieht vor, dass ein Teil aus Kunststoff und das andere aus Metall besteht. Aufgrund der stark unterschiedlichen Ausdehnungskoeffizienten und Eigenschaften dieser Teile wird durch die Erfindung ein optimierter Schutz gegen Umwelteinflüsse bereitgestellt.

Das aus Kunststoff bestehende Teil bildet insbesondere eine teilweise Umspritzung des Metallteiles. Obwohl eine solche Umspritzung eine dichte, auch feuchtedichte Verbindung zwischen diesen Teilen sicherstellt, die auch neben dem Formschluss Adhäsion ermöglicht, wird durch das Dichtmittel eine zusätzliche Sicherheit gegen Umwelteinflüsse über die Lebensdauer eines Gasgenerators geschaffen, denn es wäre zumindest theoretisch denkbar, dass im Lauf der Jahre könnten durch die unterschiedlichen Wärmeausdehnungen und das unterschiedliche Ausdehnungsverhalten eventuell kleine Spalte entstehen könnten.

In diesem Zusammenhang ist zu erwähnen, dass Gasgeneratoren und damit die Verbindung der Teile sowie die Wirksamkeit des Dichtmittels in einem Einsatztemperaturbereich von mindestens -40° bis wenigstens 120° C zuverlässig arbeiten bzw. wirken müssen. Um diese Eigenschaften zu erfüllen, hat das Dichtmittel eine hohe Flexibilität, auch bei tiefen Temperaturen. Weitere Eigenschaften sind eine geringe Viskosität im flüssigen Zustand beim Auftrag zum Eindringen in Mikrospalte eine gute Benetzung der unterschiedlichen Oberflächen und möglichst eine schnelle Aushärtung.

Diese schnelle Aushärtung kann beispielsweise dadurch erreicht werden, dass das Dichtmittel flüssig aufzubringen und anschließend UV-aushärtbar ist.

Wie zuvor bereits erwähnt, ist das Dichtmittel insbesondere bei einem Gasgenerator zwischen einem Kunststoffteil und einem Metallteil eingesetzt. Ein bevorzugtes Ausführungsbeispiel ist dabei die zusätzliche Abdichtung zwischen einem Sockel eines Anzünders, der aus Kunststoff besteht, und dem angrenzenden Gehäuseteil des Gasgenerators, welches üblicherweise aus Metall ist. Im Übergangsbereich zwischen Sockel und Gehäuseteil weist der erfindungsgemäße Gasgenerator das Dichtmittel auf.

Der Sockel kann durch Umspritzen des Teiles aus Metall gebildet sein.

Vorzugsweise ist in den Sockel auch ein vorgefertigter Anzünder abschnittsweise eingebettet, was insbesondere beim Spritzgießen erfolgt.

Der Sockel bildet zudem vorzugsweise eine Anzündersteckeraufnahme aus, das heißt, der Zünderstecker, der auf die Kontaktstifte gesteckt wird, wird im Sockel selbst gehaltert.

Das aus Metall bestehende Teil kann ein Außengehäuseteil des Gasgenerators sein. Das Dichtmittel wird von außen auf die Teile aufgebracht, nachdem sie bereits miteinander verbunden sind und nicht während der Verbindung der Teile.

Das aus Kunststoff bestehende Teil ist zum Beispiel an den Rand einer Öffnung im Außengehäuseteil angespritzt, insbesondere um dieses zu schließen.

Das Dichtmittel wird darüber hinaus vorzugsweise auch nicht großflächig auf den Gasgenerator aufgebracht, sondern nur am Übergangsrand der aneinanderstoßenden Teile. Zum Schutz des Dichtmittels ist dieses insbesondere in einer am Übergang der aneinanderstoßenden Teile vorgesehenen Vertiefung eingebracht. Das Dichtmittel kann dabei die Vertiefung vollständig oder nahezu vollständig ausfüllen. Vorzugsweise steht das Dichtmittel nicht gegenüber der Vertiefung nach außen vor. Insbesondere entsteht die Vertiefung durch zwei aneinanderstoßende Radien der beiden benachbarten Teile, die eine geschwungen V-förmige Nut generieren.

Eine bevorzugte Ausführungsform der Erfindung sieht vor, dass das Dichtmittel ein Kleber, insbesondere Acrylatkleber ist.

Die bevorzugten mechanischen, chemischen und physikalischen Eigenschaften des Dichtmittels sind in den Ansprüchen angegeben, wobei zu betonen ist, dass eine oder mehrere dieser genannten Eigenschaften vorhanden sein sollten.

Beim Auftrag des Dichtmittels ist es wichtig, dass dieses an allen erforderlichen, vorbestimmten Stellen aufgetragen wird. Gemäß einer bevorzugten Ausführungsform und gemäß eines erfindungsgemäßen Verfahrens ist vorgesehen, dass das Dichtmittel einen Farbstoff, insbesondere fluoreszierenden Farbstoff enthält, mittels dem die Erstreckung des Dichtmittels kontrolliert werden kann. Die Farbe im Dichtmittel sollte sich deutlich von der (falls vorhanden) Farbe des Kunststoffes des Teiles oder, allgemeiner, der Teile, an die das Dichtmittel angrenzt, unterscheiden.

Die Kontrolle bezüglich der Erstreckung des Auftrags des Dichtmittels kann gegebenenfalls sogar automatisch über eine Kamera erfolgen.

Bei Verwendung eines fluoreszierenden Farbstoffs wird das Dichtmittel, genauer gesagt die durch das Dichtmittel gebildete Raupe, mit UV-Licht bestrahlt, was eine besonders einfache, vollautomatische Kontrolle erlaubt.

Die Erfindung schafft, darüber hinaus oder in Ergänzung zu den vorerwähnten Merkmalen, einen Gasgenerator, insbesondere gemäß der zuvor und/ oder nachstehend beschriebenen Art, bei dem eine ausgezeichnete Filterwirkung erzielt wird. Hierzu ist stromaufwärts von Ausströmöffnungen des Gasgenerators ein ringförmiger, bevorzugt im wesentlichen zylindrischer Filter im Gasgenerator vorgesehen, der zwei axiale Enden aufweist. Der Filter verläuft an einem seiner axialen Enden nach außen abgewinkelt, insbesondere geradlinig abgewinkelt. Dieses Abwinkeln des Filters, welches bereits beim Herstellen des Filters und nicht erst beim Einbau durch Aufbringen einer Spannkraft erzeugt wird, gibt dem Filter in axialer Richtung eine größere Elastizität. Damit kann sich der Filter beim Einbau in den Gasgenerator sehr gut an seine angrenzenden Wände anpassen und erlaubt eine sichere, exakt vorbestimmbare Vorspannkraft. Damit wird bei den stets vorhandenen Toleranzen sichergestellt, dass der Filter auch an den Wänden anliegt und keine Spalte zwischen Filter und angrenzender Wand entstehen, die für Leckageströme verantwortlich wären.

Der Filter hat im abgewinkelten Bereich insbesondere dieselbe Dicke wie in einem mittleren Bereich, der an den abgewinkelten Bereich angrenzt. Dies soll die Elastizität verbessern und darüber hinaus auch Bauraum sowie Gewicht reduzieren. Darüber hinaus muss beim Herstellen des Filters auch nicht mehr Drahtlänge und damit Masse in einen bestimmten Bereich transportiert oder verbaut werden, so dass die Abwinklung einfach über eine plastische Verformung erfolgen kann.

Vorzugsweise verläuft die Filterwand im axialen Querschnitt gesehen zwischen den Enden im Wesentlichen S-förmig, wobei die Abwinklung ein Teil des "S" ist. Auch dies soll der Erhöhung der Elastizität dienen. Die S-Form bezieht sich auf den eingebauten Zustand, in dem der Filter vorzugsweise axial verspannt im Gasgenerator positioniert ist.

Eine besonders gute Lagesicherung aber auch Abdichtung ergibt sich dadurch, dass der abgewinkelte Bereich in einem Eckbereich des Gasgenerators, der von einer Umfangswand und einem Boden gebildet ist, anliegt. Über den Eckbereich lässt sich der Filter seitlich, aber auch axial positionieren und gegebenenfalls vorspannen.

Der Filter ist insbesondere von in einem Außengehäuse des Gasgenerators vorgesehenen Ausströmöffnungen seitlich beabstandet, so dass sich vor den Ausströmöffnungen eine Kammer bilden kann, die es erlaubt, dass der gesamte Filterabschnitt durchströmt wird und nicht nur die Bereiche des Filters, die unmittelbar vor den Ausströmöffnungen liegen.

Zur Erzielung der axialen Stabilität und zur Verbesserung der Dichtwirkung am Rand des Filters kann zum Beispiel an einem axialen Ende, vorzugsweise an dem zum abgewinkelten Ende entgegengesetzten Ende, der Filter verjüngt auslaufen. Diese Verjüngung lässt sich durch plastisches Verformen des Filters oder durch geringeren Materialeinsatz in diesem Bereich herstellen. Insbesondere jedoch sollte das verjüngte Ende relativ flexibel sein, so dass es sich beim Einbau in den Gasgenerator an die angrenzende Wand möglichst optimal anschmiegen kann.

Der Filter liegt an seinen axialen Enden, insbesondere an den Stirnseiten, an Gasgeneratorteilen an. Die radial innerste Anlagestelle des abgewinkelten Endes sollte dabei vorzugsweise am zugeordneten Gasgeneratorteil radial weiter außen liegen als die radial äußerste Anlegestelle des entgegengesetzten axialen Endes am zugeordneten Gasgeneratorteil. Das bedeutet, dass in Axialrichtung beim axialen Verspannen des Filters die Anlageflächen seitlich versetzt liegen, damit ein leichtes Abknicken erfolgen kann. Auch hierdurch soll die axiale Elastizität verbessert werden.

Der Filter besteht vorzugsweise aus einem Drahtgeflecht, das Drähte mit im Wesentlichen gleichem Querschnitt aufweist. Der Filter kann gemäß einer anderen bevorzugten Ausführungsform auch aus verschieden dicken Drähten hergestellt sein. Üblicherweise sind die Filter ein Drahtgestrick oder -gewirk.

Wenn der Filter ein verjüngt auslaufendes axiales Ende hat, lässt sich dieser verjüngte Bereich besonders einfach dadurch herstellen, dass hier volumenbezogen eine größere Länge dünner Drähte verbaut wird als im angrenzenden Bereich, so dass dieser verjüngte Bereich auch weicher wird.

Die Erfindung betrifft ferner einen Gasgenerator, insbesondere gemäß der zuvor und/ oder nachstehend beschriebenen Art, der sich durch ein schnelles Anzünden seines pyrotechnischen Materials auszeichnet. Dies wird bei einem Gasgenerator erreicht, der wenigstens einen Anzünder, insbesondere in Form eines vorgefertigten Bauteils (sogenannter Squib) aufweist. Durch Aktivieren des Anzünders wird unmittelbar oder indirekt ein pyrotechnisches Material, das in einer Brennkammer angeordnet ist, über wenigstens eine Überströmöffnung gezündet. Das Gas und die heißen Partikel, die entweder direkt vom Anzünder oder vom Anzünder und einer Verstärkerladung in die Brennkammer strömen, zünden dort das pyrotechnische Material an.

Erfindungsgemäß ist vorgesehen, dass diese Überströmöffnung nach Aktivieren des Anzünders zum Anzünden des pyrotechnischen Materials relativ zu diesem bewegbar ist bzw. bewegt wird. Das sogenannte Anzündgas und die heißen Partikel strömen folglich nicht an einer festen Stelle des sogenannten Treibsatzes in diesem ein, sondern überstreichen während des Anzündvorgangs verschiedene Bereiche des Treibsatzes, so dass die Anzündfläche insgesamt vergrößert wird. Dies verbessert die Anzündgeschwindigkeit und sorgt damit für einen schnelleren Druckanstieg.

Die Relativbewegung zwischen Überströmöffnung und pyrotechnischem Material, dem sogenannten Treibsatz, kann durch Relativbewegen des Treibsatzes oder aber, vorzugsweise, durch eine verschiebbare Wand erfolgen. Die verschiebbare Wand hat die Überströmöffnung oder -öffnungen und bewegt sich sozusagen am Treibsatz entlang bzw. ist bezüglich diesem ortsveränderlich.

Gemäß einer Ausführungsform ist zwischen dem Anzünder und der Brennkammer eine Zwischenkammer vorgesehen. Diese Zwischenkammer kann zum Beispiel eine Verstärkerladung aufnehmen oder auch mit entzündlichem Gas gefüllt sein. Durch eine Kappe ist diese Zwischenkammer von der Brennkammer getrennt. Die Kappe ist mit der oder den Überströmöffnungen versehen und so im Gasgenerator angeordnet, dass durch Aktivieren des Anzünders verschiebbar ist, bzw. sie nach dem Aktivieren des Anzünders verschoben wird.

Eine weitere Besonderheit des erfindungsgemäßen Gasgenerators, die wie auch die übrigen Besonderheiten allein oder mit einem oder mehreren anderen Ideen insbesondere gemäß der zuvor und/ oder nachstehend beschriebenen Art, in Kombination eingesetzt werden können, sorgt für eine leichte oder vereinfachte Fertigung des Gasgenerators. Dieser hat wenigstens einen Anzünder, insbesondere in Form eines vorgefertigten Bauteils und eine (insbesondere eine Verstärkerladung aufnehmende) Zwischenkammer. Diese Zwischenkammer ist wie bereits erläutert vorzugsweise zwischen dem Anzünder und der Brennkammer angeordnet. Das bedeutet, die Zwischenkammer grenzt an den Anzünder an, und das Anzündgas des Anzünders strömt in die Zwischenkammer ein. Die Zwischenkammer selbst ist durch eine Kappe begrenzt, die mit ihrem zünderseitigen, offenen Ende auf einen Sockel aufgeschoben ist. Bei bisherigen Kappen werden diese oft in eine Bohrung eines sehr massiven Teils eingepresst und verbördelt oder an einem Sockel angeschweißt, was natürlich aufwendiger in Herstellung und Fertigung ist, als das Aufstecken auf einem ohnehin vorhandenen Sockel.

Die Kappe kann mit dem Sockel verpresst oder aufgepresst und/oder so am Sockel angebracht sein, dass sie beim Aktivieren des Anzünders verschiebbar ist bzw. verschoben wird. Die Verschiebekraft, die zur Bewegung der Kappe notwendig ist, kann durch das Anzündgas beim Aktivieren des Anzünders oder auch durch das Anzündgas des Anzünders und das zusätzliche, in der Zwischenkammer erzeugte Gas aufgebracht werden.

Die Kappe sollte bevorzugt im nicht aktivierten Zustand des Gasgenerators stirnseitig an ein elastisches Bauteil, insbesondere an einen elastischen Füllkörper angrenzen. Elastische Füllkörper am Rand des oder im Treibstoffbettes sind bevorzugt, um die Schüttung aus pyrotechnischem Material (chaotische Schüttung) vorzuspannen. Der elastische Füllkörper hat in diesem Zusammenhang eine Doppelfunktion, denn er dient als Volumenausgleichselement und gleichzeitig als Anschlag, genauer gesagt als verschieblicher Anschlag für die Kappe. Zur Erzielung einer verbesserten Kompaktheit kann der Füllkörper eine Ausnehmung aufweisen, in die die Kappe abschnittsweise ragt. Die Kappe kann bei ihrer Bewegung das elastische Bauteil komprimieren, so dass dadurch die Bewegungsstrecke erst ermöglicht wird.

Das elastische Bauteil kann auch zusätzlich als Filter ausgeführt sein, insbesondere aus Maschengestrick oder -gewirk.

Auch ist es angedacht, dass das elastische Bauteil vorzugsweise innenseitig an einer Stirnwand des Gasgenerators anliegt.

Der Sockel wird zum Beispiel durch Umspritzen des Anzünders erzeugt und ist vorzugsweise dafür vorgesehen, den Anzünder am Gasgenerator zu fixieren.

Die Kappe bildet gemäß einer Ausführungsform eine Trennwand zwischen der Zwischenkammer und einer Brennkammer, die vorzugsweise mit pyrotechnischem Material gefüllt ist. Die Kappe kann dabei die einzige Trennwand zwischen diesen beiden Kammern sein.

Die Kappe hat wenigstens eine, vorzugsweise mehrere gleichmäßig am Umfang vorgesehene seitliche Überströmöffnung.

Gasgeneratoren werden aktiviert, indem ein elektrischer Impuls über von der Außenseite des Gasgenerators zugängliche Kontaktstifte an einen innerhalb des Außengehäuses des Gasgenerators angeordneten Anzünder abgegeben wird.

Die feste und dichte, insbesondere feuchtedichte, Verbindung muss über die gesamte Lebensdauer des Gasgenerators gewährleistet sein.

In einem weiteren Aspekt der Erfindung hat der Gasgenerator, insbesondere gemäß der zuvor und/ oder nachstehend beschriebenen Art, ein Außengehäuse, vorzugsweise mit einer zentralen Achse, und einen in einen Sockel eingebetteten Anzünder, wobei das Außengehäuse oder ein mit dem Außengehäuse verbundenes Teil eine Einbuchtung aufweist, in die sich der Sockel erstreckt. Die die Einbuchtung bildende Wand ist abschnittsweise radial nach innen gewölbt und hat entfernt von der Mündung der Einbuchtung eine nach außen verlaufende Ausbauchung. Auf diese Weise ist eine Art Hinterschnitt gebildet, in dem sich das Material des Sockels radial weiter nach außen erstreckt als die Wand des Außengehäuses oder, bei einer nicht einstückigen Ausführung, das mit dem Außengehäuse verbundene Teil im Bereich der Mündung. So entsteht eine zusätzliche Sicherung des Sockels und des Anzünders.

Die Wölbung kann ringförmig umlaufen, vorzugsweise bezogen auf die zentrale Achse. Es ist aber auch möglich, nur an einzelnen Stellen am Umfang der Einbuchtung einzelne Ausbuchtungen vorzusehen.

Die die Einbuchtung bildende Wand hat vorzugsweise angrenzend an die Wölbung die gleiche Wandstärke wie in dem gewölbten Bereich, d.h. die Wand als Ganzes wird gebogen, und der Konturverlauf an der Innenseite folgt der auf der Außenseite.

In einem Axialschnitt gesehen kann dabei die Einbuchtung eine S-Form aufweisen, wobei der Mündungsabschnitt der die Einbuchtung bildenden Wand nach außen verläuft. Vorzugsweise sind keine scharfen Kanten oder Übergänge vorgesehen, sondern eine gleichmäßige Rundung der Innenwand der Einbuchtung. Auf diese Weise kann beim Umspritzen das den Sockel bildende Kunststoffmaterial die Ausbuchtungen leicht ausfüllen.

Die Erfindung schafft darüber hinaus einen Gasgenerator, insbesondere gemäß der zuvor und/ oder nachstehend beschriebenen Art, mit einem Außengehäuse, vorzugsweise mit einer zentralen Achse, und einem in einen Sockel eingebetteten, vorgefertigten Anzünder, wobei das Außengehäuse oder ein mit dem Außengehäuse verbundenes Teil eine Einbuchtung aufweist, in die sich der Sockel erstreckt, und eine die Einbuchtung bildende Wand einen Bodenabschnitt mit einer Öffnung aufweist, durch die sich der Sockel hindurch erstreckt, wobei der Bodenabschnitt auf seinen entgegengesetzten Außenseiten in dem Bereich, in dem der Sockel an ihm anliegt, zumindest einen Vorsprung und/oder eine Vertiefung aufweist. Diese Formgebung sorgt neben einer festen Verbindung auch für eine Verbesserung der Dichtigkeit gegenüber möglichen Feuchtepfaden von außen.

Zum Beispiel kann der Rand der Öffnung auf einer Außenseite einen konvex geformten Vorsprung aufweisen. "Außenseite" heißt dabei die zur Außenseite des Gasgenerators gerichtete Seite.

Der Vorsprung kann beispielsweise durch einen umlaufenden Wulst gebildet sein. Es ist möglich, dass an dieser Stelle die Wandstärke des Bodenabschnitts vergrößert ist.

Der Bodenabschnitt ist z.B. durch einen Teil oder Abschnitt eines Verschlusskörpers gebildet, der wiederum Teil des Außengehäuses des Gasgenerators ist. Es kann aber auch ein separater Teil des Gasgenerators hierzu vorgesehen sein.

Bevorzugt weist der Bodenabschnitt auf der dem Vorsprung entgegengesetzten Außenseite im Bereich des Vorsprungs eine insbesondere ringförmig umlaufende Vertiefung auf. Diese Vertiefung ist beispielsweise in das Innere des Gasgenerators hinein gerichtet.

Vorteilhaft sind sowohl der Vorsprung als auch die optionale Vertiefung vom Kunststoffmaterial des Sockels umgeben bzw. ausgefüllt.

Dies ist besonders vorteilhaft, wenn der Sockel durch zumindest abschnittsweises Umspritzen der die Einbuchtung bildenden Wand gebildet ist, da auf diese Weise eine dichte Verbindung geschaffen wird.

In einem weiteren Aspekt der Erfindung hat ein erfindungsgemäßer Gasgenerator, insbesondere gemäß der zuvor und/ oder nachstehend beschriebenen Art, ein Außengehäuse, das an seinem Außenumfang einen Flansch aufweist, wobei der Flansch unsymmetrisch bzw. in einer von der Symmetrie abweichenden Gestalt ausgebildet ist, um eine eindeutige Einbaulage zumindest in Verdrehrichtung bei der Befestigung des Gasgenerators sicherzustellen.

Die Unsymmetrie lässt sich vorteilhaft dadurch erreichen, dass im Flansch wenigstens eine Kerbe als Einbaupositioniermittel vorgesehen ist. Natürlich können auch andere Einbaupositioniermittel bereitgestellt sein, die eine sogenannte Indexierung erlauben.

In einer möglichen Ausführung sind mehrere, insbesondere drei, Kerben vorgesehen, die in unterschiedlichen Winkelabständen entlang des Umfangs des Flansches angeordnet sind. Auf diese Weise ist mit einfachen Mitteln die Einbaulage des Gasgenerators eindeutig vorgegeben.

Alternativ oder zusätzlich kann als Einbaupositioniermittel eine Positionierungsöffnung, insbesondere ein Langloch, im Flansch vorgesehen sein.

Die Erfindung betrifft auch ein Modul mit einem vorstehend und/ oder nachfolgend erwähnten Gasgenerator. Das Modul hat ein Halteelement, an dem bevorzugt ein mit dem Einbaupositioniermittel des Flansches in Eingriff kommendes Gegenstück vorgesehen ist.

Das Gegenstück kann zum Beispiel wenigstens einen am Halteelement ausgebildeten Vorsprung umfassen.

Es ist möglich, dass das Halteelement wenigstens einen Befestigungsbolzen aufweist, wobei der Befestigungsbolzen am Außenumfang des Flansches anliegt. Vorzugsweise liegt der Befestigungsbolzen aber nicht im Bereich des Einbaupositioniermittels am Flansch an, sondern entfernt hiervon.

Das Modul kann insbesondere ein Gassackmodul sein, aber auch eine andere Baugruppe, die einen Gasgenerator aufweist, zum Beispiel ein Strafferantrieb.

Ist das Modul ein Gassackmodul, bei dem ein Gassack vorgesehen ist, der eine Einlassöffnung aufweist, ist vorteilhaft der Rand der Einlassöffnung zwischen dem Flansch und dem Halteelement geklemmt.

Die Erfindung betrifft darüber hinaus einen Gasgenerator, insbesondere gemäß der zuvor und/ oder nachstehend beschriebenen Art, mit einer zumindest teilweise mit pyrotechnischem Material gefüllten Brennkammer, die von Brennkammerwänden begrenzt ist, wobei sämtliche Brennkammerwände aus demselben Material, insbesondere demselben Stahl bestehen.

Eine Brennkammerwand muss eine gewisse Eigenstabilität aufweisen, um nach dem Aktivieren des Gasgenerators während des Zündens des pyrotechnischen Materials nicht vollständig zerstört zu werden. Das pyrotechnische Material grenzt unmittelbar an diese stabilen Brennkammerwände an und liegt somit teilweise über viele Jahre an den Brennkammerwänden an, ohne dass es hierbei zu chemischen Veränderungen kommen sollte. Die Erfindung sieht vor, dass sämtliche Brennkammerwände aus demselben Metall, insbesondere Stahl bestehen. Bislang werden die Brennkammerwände vor allem aufgrund ihrer unterschiedlichen Belastungen aus unterschiedlichen Materialien hergestellt. Die Erfindung vereinfacht die Konzeption eines Gasgenerators, denn die sogenannte Treibstoffverträglichkeit zu angrenzenden Bauteilen wird gesichert, wenn wirklich alle Brennkammerwände aus demselben Material bestehen. Somit muss nur eine Materialpaarung pyrotechnisches Material zu Brennkammermaterial erprobt werden. Insbesondere ist bevorzugt, dass auch etwaige die Brennkammer zu dem Anzünder und/ oder zu der Zwischenkammer abgrenzende Wände aus demselben Material, insbesondere Stahl, insbesondere demselben Stahl gebildet sind.

Die Brennkammerwände sind insbesondere mehrere miteinander verbundene Teile, wobei diese Teile insbesondere tragende Teile sind. Tragende Teile sind solche Teile, die nach dem Abbrennen des pyrotechnischen Materials noch erhalten sind.

In diesem Zusammenhang und auch im Zusammenhang mit anderen zuvor und anschließend erwähnten Besonderheiten der Erfindung ist zu betonen, dass der Gasgenerator nach der Erfindung insbesondere ein Gasgenerator mit einer als Brennkammer ausgebildeten Ringkammer ist. Solche Gasgeneratoren werden auch als toroidförmige Gasgeneratoren bezeichnet.

Eine weitere Eigenschaft des erfindungsgemäßen Gasgenerators besteht darin, dass seine axiale Höhe geringer als sein Durchmesser ist. Solche Gasgeneratoren werden insbesondere in Lenkradgassackmodulen verbaut.

Ein weiterer Aspekt der Erfindung sieht vor, dass ein erfindungsgemäßer Gasgenerator, insbesondere nach der zuvor und/ oder nachfolgend beschriebenen Art, ein Außengehäuse und eine innerhalb des Außengehäuses angeordnete Brennkammer aufweist, die pyrotechnisches, gaserzeugendes Material enthält, wobei die Wandstärke der Bauteile, insbesondere der metallenen Bauteile, des Außengehäuses 2 mm oder weniger beträgt. Dies spart Gewicht.

Das Außengehäuse kann aus einem Diffusor und einem Verschlusskörper bestehen, wobei Diffusor und Verschlusskörper vorzugsweise eine Schalenform aufweisen. Diffusor und Verschlusskörper lassen sich ineinanderstecken, wobei ein hochgebogener Rand des Verschlusskörpers innerhalb des insbesondere topfförmigen Diffusors liegt und an der Innenwand des Diffusors anliegt.

Verschlusskörper und Diffusor können durch eine einzige festigkeitsbestimmende Verbindung aneinander befestigt sein, d.h., es ist kein Zuganker oder dergleichen vorgesehen. Die Verbindung ist insbesondere eine umlaufende Schweißnaht zwischen Diffusor und Verschlusskörper. Die Schweißnaht kann z.B. durch Laserschweißen gebildet sein. In anderen Worten beträgt somit die Wandstärke des Außengehäuses insgesamt 2,0 mm oder weniger, wobei jedoch ein Überlappungsbereich der das Außengehäuse bildenden Bauteile (insbesondere im Bereich der dies verbindenden Schweißnaht) außer Berücksichtigung bleibt.

Vorzugsweise beträgt die Wandstärke des Diffusors höchstens 2,0 mm, 1,9 mm, 1,8 mm, 1,7mm, 1,6mm, 1,5 mm, 1,4 mm, 1,3 mm, 1,2 mm, 1,1 mm oder 1,0 mm. Weiterhin vorzugsweise beträgt die Wandstärke des Verschlusskörpers höchstens 3,0 mm, 2,9 mm, 2,8 mm, 2,7mm, 2,6mm, 2,5 mm, 2,4 mm, 2,3 mm, 2,2 mm, 2,1 mm, 2,0 mm, 1,9 mm, 1,8 mm, 1,7mm, 1,6mm, 1,5 mm, 1,4 mm, 1,3 mm, 1,2 mm, 1,1 mm oder 1,0 mm. Hierdurch kann der Gasgenerator leichter gestaltet und der Gesamtenergiebereich des Fahrzeuges optimiert werden.

Es ist bevorzugt, dass der Gasgenerator bei der Aktivierung einen Brennkammerdruck von maximal 360 bar, 340 bar, 320 bar, 300 bar, 290 bar, 280 bar, 270 bar, 260 bar oder 250 bar entwickelt, dem die Wände standhalten müssen. Hierdurch kann die gesamte Auslegung des Gasgenerators und des Moduls optimiert und die Herstellung kostengünstiger gestaltet werden.

Vorzugsweise besitzt die Brennkammer eine im Wesentlichen toroidale Form, wobei insbesondere in der Mitte des Torus der Anzünder und eventuell eine Verstärkerladung in einer Zwischenkammer angeordnet sind.

Bevorzugt ist das Verhältnis des bei der Aktivierung des Gasgenerators entstehenden maximalen Brennkammerdrucks zur Wandstärke des Außengehäuses größer als 120 bar/mm, insbesondere größer als 130 bar/mm, 140 bar/mm, 150 bar/mm, 160 bar/mm und/ oder 170 bar/mm. Weiterhin vorzugsweise ist das Verhältnis des bei der Aktivierung des Gasgenerators entstehenden maximalen Brennkammerdrucks zur Wandstärke des Außengehäuses kleiner als 250 bar/mm, insbesondere kleiner als 240 bar/mm, 230 bar/mm, 220 bar/mm, 210 bar/mm, 200 bar/mm, 190 bar/mm und/ oder 180 bar/mm.

Das Verhältnis der gesamten Ausströmfläche des Gasgenerators, also der Gesamtfläche aller Ausströmöffnungen des Gasgenerators, zur Wandstärke des Außengehäuses ist bevorzugt größer als 27, 28, 29, 30, 31, 32 oder 33 mm. Das Verhältnis der gesamten Ausströmfläche des Gasgenerators, also der Gesamtfläche aller Ausströmöffnungen des Gasgenerators, zur Wandstärke des Außengehäuses ist bevorzugt größer als 32, 33, 34, 35, 36 oder 37 mm.

Das Verhältnis des Durchmessers des Diffusors zur kleinsten Wandstärke des Außengehäuses ist bevorzugt kleiner als 50 und/ oder größer als 30, vorzugsweise zwischen 31 und 49, insbesondere zwischen 32 und 48, insbesondere zwischen 33 und 47, insbesondere zwischen 34 und 46, bevorzugt zwischen 35 und 45. Der abstehende Befestigungsflansch wird dabei nicht mit gemessen, sondern nur der den Hohlkörper, den das Außengehäuse bildet, definierende Gasgeneratorteil ist zu messen. Der Diffusor hat dabei vorteilhaft eine im Wesentlichen zylindrische Umfangswand.

Das Verhältnis des Durchmessers des Diffusors zur größten axialen Höhe des Gasgenerators beträgt vorzugsweise etwa 1,8 ± 0,7, insbesondere 1,8 ± 0,5, insbesondere 1,8 ± 0,4, weiter vorzugsweise1,8 ± 0,3 insbesondere 1,8 ± 0,2, vorzugsweise 1,8 ± 0,1.

Hierbei ist es nicht erforderlich, einen Zuganker einzusetzen, also eine zusätzliche Verbindung zwischen dem oberen und dem unteren Bereich des Außengehäuses, dies ist optional aber möglich.

Der Gasgenerator hat vorzugsweise eine flache zylindrische Form, ist also breiter als hoch.

Die vorliegende Erfindung sieht noch weitere Besonderheiten vor, die zusätzlich zu oder separat von den zuvor und nachfolgend erwähnten Eigenschaften und Merkmalen vorgesehen sein können.

Zunehmend soll der Bauraum eines Gasgenerators verringert werden. Hierzu sieht die Erfindung verschiedene Optionen vor, die einzeln oder kombiniert eingesetzt werden können.

Das Außengehäuse des Gasgenerators, insbesondere gemäß der zuvor und/ oder nachstehend beschriebenen Art, hat einen an seinem Außenumfang vorgesehenen Flansch, der geschlossen umläuft. Dieser Flansch ist vorzugsweise plan und läuft in einem Übergangsbereich, der nachfolgend nicht zum Flansch gezählt werden soll, mit einem Radius in das eigentliche Außengehäuse ein. Das heißt, der Flansch geht in das Außengehäuse über. Der Radius wird bezüglich der Flanschbreite im Folgenden nicht mitgerechnet.

Entsprechend einer Idee ist der Flansch ohne Durchschrauböffnungen ausgebildet. Durchschrauböffnungen verringern die Klemmfläche zwischen Flansch und einem angrenzenden Bauteil, insbesondere einem am Flansch geklemmten Gassack, so dass ohne die Durchschrauböffnungen mehr Auflagefläche und damit Klemmfläche zur Verfügung steht. Da der Gassack eine Einlassöffnung mit einem Öffnungsrand aufweist, der insbesondere beschichtet ist, zum Beispiel mit Silikon, kann der Flansch mit dem Öffnungsrand eine Art Haft- oder Klebeverbindung eingehen. Die fehlenden Durchschrauböffnungen erhöhen die zum Verschieben des Gassacks notwendige Verschiebekraft.

Eine andere oder zusätzliche Möglichkeit besteht darin, dass der Gassack und der Flansch eine ringförmige Klemmfläche miteinander besitzen, die eine Breite aufweist, welche zwischen 5 und 12%, vorzugsweise zwischen 6 und 11%, weiterhin vorzugsweise 8 bis 10% des maximalen Durchmessers des Gasgeneratoraußengehäuses beträgt. Der Durchmesser eines Gasgenerators sagt sehr viel über das erzeugte Gasvolumen aus, was wiederum Rückschlüsse auf den auf den Gassack ausgeübten Druck und die Verschiebekraft des Gassacks zulässt. Durch Reduzierung der Flanschbreite auf die vorgegebenen Werte erreicht man eine Minimierung des Flanschdurchmessers.

Eine andere oder zusätzliche Option sieht vor, dass die ringförmige Klemmfläche für den Gassack am Flansch eine Breite aufweist, die zwischen 6 und 9,5 mm, vorzugsweise zwischen 5 und 8,5 mm, weiterhin vorzugsweise zwischen 5,5 und 7,5 mm liegt. Diese geringe Breite unterscheidet sich deutlich von bisherigen Flanschbreiten.

Zur Minimierung des Flansches kann ein erfindungsgemäßes Gassackmodul vorgesehen sein, das einen Gasgenerator, insbesondere einen zuvor erwähnten Gasgenerator, aufweist, der an seinem Außengehäuse und dessen Außenumfang einen Flansch hat, einen Gassack mit einer Einblasöffnung, die durch einen Öffnungsrand definiert ist, und ein dem Flansch gegenüberliegendes Klemmelement. Dieses Klemmelement kann ein eigener Ring oder ein eigenes Bauteil, zum Beispiel ein Diffusorkäfig oder dergleichen oder ein Gasgeneratorträger sein, um den Öffnungsrand zwischen sich und dem Flansch zu klemmen. Die Abstimmung der Klemmkraft im Bereich des Öffnungsrandes und der Klemmfläche erfolgt so, dass die durch den Maximaldruck im Gassack auftretende seitliche Verschiebekraft am Öffnungsrad zwischen 10 und 80 %, vorzugsweise zwischen 20 und 50 % geringer als die durch die Klemmkraft erzeugte Reibkraft zwischen Öffnungsrand, Flansch und Klemmelement ist. Diese relativ einfache Auslegung, so hat sich herausgestellt, ist ausreichend, um den Klemmflansch zu minimieren.

Das zuvor erwähnte Gassackmodul oder ein hiervon abweichendes, erfindungsgemäßes Gassackmodul sieht vor, dass der Gassack im geklemmten Abschnitt des Öffnungsrandes allenfalls eine Öffnung, die zur Umfangspositionierung dient, aufweist. Es ist folglich keine Klemmöffnung vorgesehen, durch die sich jeweils eine Schraube erstreckt. Löcher im Bereich des Umfangsrandes des Gassacks schwächen das Gassackgewebe und verringern die Auflagefläche. Ein Aspekt der Erfindung sieht vor, dass solche Schwächungen vermieden werden und dafür die größere Fläche des Öffnungsrandes zur Klemmung zur Verfügung steht.

Zu betonen ist, dass die zuvor und die in der nachfolgenden Beschreibung erwähnten Einzelmerkmale in beliebiger Weise miteinander kombiniert werden können. Die Erfindung ist nicht darauf beschränkt, nur in einzelnen oder in Gruppen von Merkmalen verwirklicht zu sein.

Nach einem weiteren Aspekt der Erfindung hat der Gasgenerator, insbesondere gemäß der zuvor und/ oder nachstehend beschriebenen Art, ein Außengehäuse, das einen Diffusor mit einer im Wesentlichen zylindrischen Umfangswand mit mehreren Ausströmöffnungen und einen Verschlusskörper aufweist, der mit dem Diffusor verschweißt ist, wobei Diffusor und Verschlusskörper vorzugsweise schalenförmig ausgebildet sind, und wobei die Ausströmöffnungen auf der Innenseite des Diffusors durch eine Verdämmung, vorzugsweise in Form einer Verdämmfolie, abgedeckt sind und die Verdämmung vom innenseitigen Rand des Verschlusskörpers, insbesondere einer Schweißnaht, vorzugsweise Laserschweißnaht, zwischen Diffusor und Verschlusskörper beabstandet ist. Diese Ausführung bietet den Vorteil, dass die Verdämmung bei späteren Montageschritten geschützt ist, und daher insbesondere bei Schweißverfahren, bei denen eine Wärmeentwicklung entsteht, nicht thermisch belastet wird.

Vorzugsweise beträgt der Abstand mehr als 2 mm, besonders vorzugsweise beträgt er mehr als 2,5 mm, insbesondere mehr als 3 mm. Vorzugsweise beträgt der Abstand weniger als 7 mm, besonders vorzugsweise beträgt er weniger als 6 mm, insbesondere weniger als 5,5 mm. Vorzugsweise liegt der Abstand somit zwischen 3 und 7 mm und weiter vorzugsweise zwischen 3 und 5,5 mm.

Der Verschlusskörper kann einen umlaufenden, hochstehenden Rand aufweisen, an dem er mit dem Diffusor verschweißt ist, und der kleinste Abstand der Schweißnaht zur Verdämmung beträgt wenigstens die oben genannten Abstandswerte. Auf diese Weise lässt sich eine robuste und gute Verdämmung der Ausströmöffnungen des Gasgenerators erreichen.

Weiters betrifft die Erfindung insbesondere einen Gasgenerator, vorzugsweise für ein Fahrzeuginsassen-Rückhaltesystem, und vorzugsweise nach der voranstehend und/oder nachfolgend beschriebenen Art, mit einem ersten Bauteil und einem zweiten Bauteil, das über einen gespritzten Kunststoffsockel mit dem ersten Bauteil verbunden ist, indem beide Bauteile wenigstens teilweise umspritzt sind. Ferner betrifft die Erfindung ein Verfahren zur Herstellung eines Gasgenerators.

Bei einem herkömmlichen Gasgenerator handelt es sich z.B. bei dem ersten Bauteil um einen Deckel eines Generatorgehäuses, welches mit dem zweiten Bauteil, einem Anzünder, verbunden ist, indem der Anzünder in einer Öffnung im Deckel angeordnet ist und beide Teile zusammen umspritzt sind. Auf diese Weise wird eine einfache Verbindung zwischen Anzünder und Generatorgehäuse geschaffen, die sich durch ein geringes Gewicht sowie niedrige Herstellungskosten auszeichnet.

Hierbei ist erfindungsgemäß beabsichtigt, einen Gasgenerator bzw. ein Verfahren zur Herstellung eines Gasgenerators zu schaffen, bei dem die Verbindungsstelle der Bauteile eine verbesserte Dichtigkeit aufweist.

Gemäß einem Aspekt der Erfindung ist hierzu bei einem Gasgenerator der genannten Art vorgesehen, dass das erste Bauteil in einem Kontaktbereich mit dem Kunststoffsockel eine vor dem Spritzen aufgebrachte Klebefolie aufweist. Durch die Klebefolie wird eine besonders dichte Verbindung zwischen dem Kunststoffsockel und dem ersten Bauteil erzielt. Im Gegensatz zu einer durch Aufschrumpfen eines Kunststoffes gebildeten Abdichtung kann beim erfindungsgemäßen Gasgenerator das erste Bauteil eine nahezu beliebige Geometrie aufweisen, wobei auf zusätzliche geometrische Elemente zur Erhöhung der Dichtigkeit, etwa Hinterschneidungen oder Umspritzungen, verzichtet werden kann. Auch zusätzliche Bauteile, wie eine als Feuchtigkeitssperre dienende Metallfolie oder eine Ringdichtung, sind nicht erforderlich. Daher lässt sich der erfindungsgemäße Gasgenerator besonders einfach und kostengünstig herstellen.

Das erste Bauteil besteht bevorzugt aus Metall, Keramik und/oder Kunststoff.

Wie bereits eingangs erwähnt, ist das erste Bauteil vorzugsweise ein Gasgeneratorgehäuse oder bildet ein Teilelement eines Gasgeneratorgehäuses.

Bei dem zweiten Bauteil handelt es sich insbesondere um einen vorgefertigten, nach außen geschlossenen Anzünder. Dieser hat im Allgemeinen eine metallische Außenhülle, so dass es von Vorteil sein kann, wenn auch der Anzünder (oder nur der Anzünder, der dann als erstes Bauteil anzusehen ist) vor dem Spritzen mit einer eine Haftbrücke bildenden Klebefolie versehen wird.

Eine besonders einfache Befestigung der Bauteile aneinander ergibt sich dadurch, dass das erste Bauteil eine Öffnung zur Aufnahme und Befestigung des zweiten Bauteils hat, deren Rand beim Spritzen in den Kunststoffsockel eingebettet wird. Im Fall eines Anzünders als zweitem Bauteil können dessen elektrische Anschlüsse durch die Öffnung aus dem ersten Bauteil, insbesondere dem Generatorgehäuse, herausragen.

Gemäß einer bevorzugten Ausführungsform der Erfindung entspricht die Fläche der Klebefolie gerade der Kontaktfläche zwischen dem Kunststoffsockel und dem ersten Bauteil, wodurch vollflächig für eine verbesserte Haftung des Kunststoffsockels am ersten Bauteil gesorgt ist.

Abhängig von der Form des ersten Bauteils kann es jedoch genügen, wenn die Fläche der Klebefolie kleiner als die Kontaktfläche zwischen dem Kunststoffsockel und dem ersten Bauteil ist. Auch hierdurch lässt sich in vielen Fällen bereits eine zuverlässige Abdichtung erreichen.

Eine weitere Variante der Erfindung sieht vor, die Fläche der Klebefolie größer als die Kontaktfläche zwischen dem Kunststoffsockel und dem ersten Bauteil auszubilden. Die Klebefolie dient dann zusätzlich als Korrosionsschutzschicht.

Die Klebefolie ist vorteilhaft ein vorgefertigtes Teil. Sie kann wie eine bekannte Verdämmfolie aufgebracht werden.

Bevorzugt umfasst die Klebefolie eine Kunststofffolie und eine Klebstoffschicht. Die Klebstoffschicht ist vorteilhaft direkt auf die Kunststofffolie aufgebracht. Die Klebefolie lässt sich mit ihrer Klebstoffseite auf das erste Bauteil aufkleben, so dass die Klebstoffschicht die Klebefolie beim Spritzgießen am metallischen ersten Bauteil fixiert hält. Dabei kommt der beim Spritzgießen eingebrachte Kunststoff in Kontakt mit der Kunststofffolie. Diese schützt dabei die darunterliegende Klebstoffschicht vor den hohen Temperaturen.

Die Kunststofffolie besteht vorteilhaft aus dem gleichen Material wie der Kunststoffsockel oder aus einem Material, das geeignet ist, eine Verbindung mit dem Material des Kunststoffsockels einzugehen.

Vorzugsweise verschmilzt beim Spritzen des Kunststoffsockels die Kunststofffolie mit dem Kunststoffsockel. Dabei bildet sich entlang einer Verbindungszone eine feste Verbindung zwischen der Klebefolie und dem Kunststoffsockel aus. Alternativ kann die feste Verbindung auch durch eine chemische Reaktion des Materials des Kunststoffsockels mit dem Material der Kunststofffolie erfolgen.

Die Klebefolie, insbesondere die Klebstoffschicht, bildet bevorzugt eine Haftbrücke zwischen dem ersten Bauteil und dem Kunststoffsockel, die vorzugsweise plastisch und/oder elastisch verformbar ist. So lassen sich Spannungen und Scherkräfte ausgleichen, die bei einem Temperaturwechsel aufgrund unterschiedlicher Ausdehnungskräfte der Materialien auftreten.

Der Klebstoff lässt sich in genau definierter, beispielsweise konstanter Schichtdicke auf die Kunststofffolie aufbringen.

Der Klebstoff der Klebstoffschicht kann z.B. über einen vorbestimmten Anpressdruck oder eine thermische Einwirkung aktiviert bzw. ausgehärtet werden. Hierfür können beispielsweise der Anpressdruck beim Aufkleben oder die Wärmeeinwirkung durch den beim Spritzgießen eingesetzten flüssigen Kunststoffs ausgenutzt werden.

Als Material für die Kunststofffolie kommt z.B. ein thermoplastisches Elastomer (TPE) in Frage.

Gemäß einem zweiten Aspekt der Erfindung ist ein Verfahren zur Herstellung eines Gasgenerators, insbesondere für ein Fahrzeuginsassen-Rückhaltesystem, vorgesehen, wobei das Verfahren die folgenden Schritte aufweist. Zunächst werden ein erstes Bauteil, das Metall und/oder Keramik und/oder Kunststoff enthält, sowie ein mit dem ersten Bauteil zu verbindendes zweites Bauteil bereitgestellt. Anschließend wird auf das erste Bauteil in einem Verbindungsbereich eine Klebefolie aufgebracht, und das zweite Bauteil wird relativ zum ersten Bauteil positioniert. Das erste und das zweite Bauteil werden gemeinsam jeweils wenigstens teilweise umspritzt, wodurch ein die Bauteile verbindender Kunststoffsockel gebildet wird. Wie bereits mit Bezug auf den erfindungsgemäßen Gasgenerator beschrieben, ist das erste Bauteil vorzugsweise ein Gasgeneratorgehäuse oder ein Teil davon und das zweite Bauteil ein vorgefertigter Anzünder.

Bevorzugt verschmilzt beim Umspritzen der beiden Bauteile die Kunststofffolie der Klebefolie mit dem Kunststoffsockel.

Darüber hinaus treffen auch sämtliche mit Bezug auf den Gasgenerator genannten vorteilhaften Weiterbildungen auf das erfindungsgemäße Verfahren zu.

Weitere Merkmale und Vorteile der Erfindung ergeben sich aus der nachfolgenden Beschreibung mehrerer bevorzugter Ausführungsformen in Verbindung mit den beigefügten Zeichnungen. In diesen zeigen:
- Figur 1 eine Schnittansicht eines erfindungsgemäßen Gasgenerators;
- Figur 2 eine Detailansicht aus Figur 1;
- Figur 3 eine weitere Detailansicht aus Figur 1;
- Figur 4a eine schematische Draufsicht auf den Flansch eines erfindungsgemäßen Gasgenerators;
- Figur 4b eine Variante des Flansches in Figur 4a;
- Figuren 5 und 6 jeweils eine schematische perspektivische Darstellung eines Gassackhalteblechs eines erfindungsgemäßen Moduls, insbesondere Gassackmoduls, mit einem eingebauten erfindungsgemäßen Gasgenerator;
- Figur 7 eine schematische Querschnittsansicht eines erfindungsgemäßen Gassackmoduls mit einem erfindungsgemäßen Gasgenerator;
- Figur 8 eine schematische perspektivische Darstellung eines Diffusors eines erfindungsgemäßen Gasgenerators; und
- Figur 9 eine schematische Schnittansicht des Diffusors in Figur 8.
- Figur 10 eine Schnittansicht eines erfindungsgemäßen Gasgenerators;
- Figur 11 ein vergrößertes Detail aus Figur 10, das die Verbindung eines ersten mit einem zweiten Bauteil zeigt; und
- Figur 12 vergrößert den Übergang vom ersten zum zweiten Bauteil.

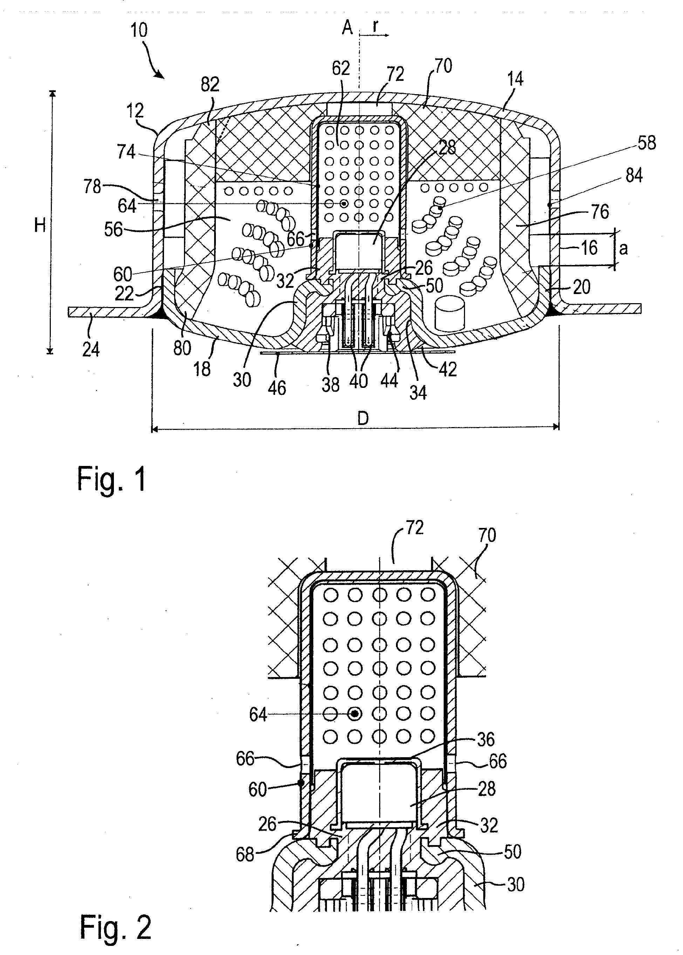

Figur 1 zeigt einen Gasgenerator 10 mit einem Außengehäuse 12, das hier aus einem topfförmigen Diffusor 14 mit einer im wesentlichen zylindrischen Umfangswand 16 und einem Verschlusskörper 18, der hier auch den Boden des Gasgenerators 10 bildet, zusammengesetzt ist.

Der Verschlusskörper 18 besitzt einen umlaufenden, hochgezogenen Rand 20, der an der Innenseite der Umfangswand 16 des Diffusors 14 anliegt und mittels einer Schweißnaht 22 mit dieser fest verbunden ist. Die Schweißnaht 22 erstreckt sich vorzugsweise über die gesamte Anlagefläche zwischen Verschlussschale 18 und Diffusor 14 und bis zur Außenseite des Gasgenerators 10, wo sie eine zwischen Verschlusskörper 18 und Diffusor 14 bestehende Nut ausfüllt. Zur Verbindung von Diffusor 14 und Verschlusskörper 18 kann beispielsweise ein Laserschweißverfahren eingesetzt werden.

Am verschlusskörperseitigen Ende ist die Umfangswand 16 des Diffusors 14 nach außen gebogen, sodass ein horizontal um dem Gasgenerator 10 umlaufender, planer Flansch 24 gebildet ist.

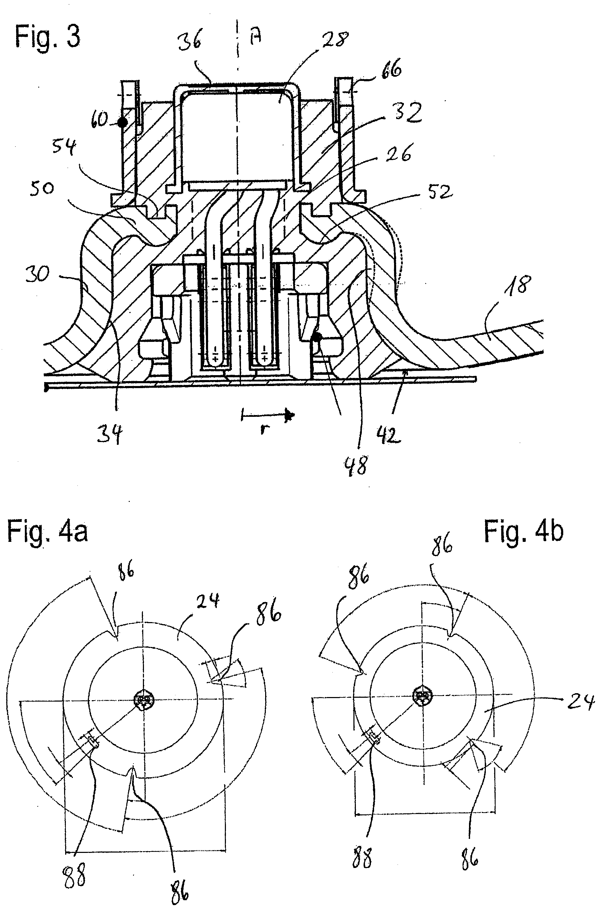

Der Verschlusskörper 18 hat eine zentrale Öffnung 26, die zur Aufnahme eines vorgefertigten Anzünders 28 dient. Zur zentralen Öffnung 26 hin hat der Verschlusskörper 18 eine Einbuchtung 34 mit einem ringförmigen Abschnitt 30. Die Einbuchtung 34 ist eine Art Einstülpung des Außengehäuses. Dieser Bereich des Gasgenerators 10 ist im Detail in den Figuren 2 und 3 dargestellt.

Der Anzünder 28 ist von einem Sockel 32 umgeben, der den Anzünder 28 auch mit dem Verschlusskörper 18 und insbesondere mit dem Rand der Öffnung 26 und dem ringförmigen Abschnitt 30 verbindet.

Der Sockel 32 besteht aus einem Kunststoffmaterial und wird spritzgegossen, nachdem der Anzünder 28 in die Öffnung 26 eingebracht wurde. Beim Spritzgießen umschließt das Kunststoffmaterial sowohl den größten Teil des Anzünders 28 als auch den Rand der Öffnung 26 und füllt auch die durch den ringförmigen Abschnitt 30 gebildete Einbuchtung 34 auf der Außenseite des Gasgenerators 10 mit Ausnahme einer nach außen gerichteten Zündersteckeraufname 38, in die Kontaktstifte für eine elektrische Kontaktierung des Anzünders 28 hineinragen, vollständig aus. Der Anzünder 38 wird beim Umspritzen gleichzeitig in den Sockel 32 eingebettet. Durch den Sockel 32 und den Anzünder 28 ist die Öffnung 26 vollständig verschlossen und die Einbuchtung 34 wird vom Sockel sozusagen ausgekleidet.

In diesem Fall ist der Anzünder 28 so weit vom Sockel 32 umschlossen, dass lediglich seine Oberseite sowie ein kurzer oberer Abschnitt einer Anzünderkappe 36 freigelassen sind.

Der Anzünder 28 ist vorzugsweise ein separates, vorgefertigtes Bauteil. Die Anzünderkappe 36 ist entweder Teil des vorgefertigten Anzünders 28 oder ein separates, auf den Anzünder 28 aufgesetztes Bauteil.

Die Anzünderkappe 36 besteht in diesem Beispiel aus einem Kunststoff, und zwar aus einem gleichartigen Kunststoff wie der Sockel 32, vorzugsweise aus dem identischen Kunststoff. Vorzugsweise wird ein Standardmaterial mit einem Glasfaseranteil eingesetzt, wobei der Glasfaseranteil zum Beispiel 30 Gew.% betragen kann. Die Verwendung eines gleichartigen oder gleichen Kunststoffes führt dazu, dass beim Spritzgießen die Anzünderkappe 36 ganz oder teilweise mit dem Sockel 32 verschmilzt, und sich so eine dichte und unlösbare Verbindung bildet.

Die Einbuchtung 34 kann natürlich auch an einem separaten Teil des Gasgenerators 10 ausgebildet sein, der mit dem Außengehäuse 12, insbesondere mit dem Verschlusskörper 18 verbunden ist.

An der Außenseite der Einbuchtung 34 ist zwischen dem Verschlusskörper 18 und dem Sockel 32 eine umlaufende Vertiefung gebildet, die mit einem Dichtmittel 42, hier in Form eines Acrylatklebers ausgefüllt ist.

Das Dichtmittel 42 ist so ausgewählt, dass es sowohl am Metall der Verschlussschale 18 als auch am Kunststoff des Sockels 32 haftet. Das Dichtmittel 42 wird nach dem Spritzgießen des Sockels 32 von außen aufgebracht und liegt vollständig außerhalb des Außengehäuses 12 des Gasgenerators 10 und komplett in der umlaufenden Vertiefung.

Das Dichtmittel 42 wird in flüssiger oder pastöser Form aufgebracht und mit UV-Licht ausgehärtet. Es weist eine hohe Flexibilität auch bei tiefen Temperaturen von bis zu -40°C auf. Es hat eine geringe Viskosität, so dass es sich leicht verarbeiten lässt, gute Benetzungseigenschaften sowohl für Metall- als auch für Kunststoffoberflächen und haftet sowohl auf Metall als auch auf Kunststoff.

Das Dichtmittel besitzt wenigstens eine der folgenden Eigenschaften:

| | |
|---|---|
| Bruchfestigkeit nach ISO 527 [MPa] | 2-4, insbes. 3; |
| Reiß- oder Bruchdehnung nach ISO 527 [%] | 200-400, insbes. 300 ± 40; |
| Viskosität bei 23°C nach Brookfield Sp/U und 3/100 [mPas] | 400-800, insbes. 600 ± 80; |
| Glasumwandlungstemperatur (Rheometer) [°C] | 10-30, insbes. 20 ± 4; |
| Therm. Expansionskoeffizient bei 30-140°C [ppm/K] | 150-350, insbes. 260±30; |
| Dichte bei 23 °C [g/cm³] | 0,6-1,5, insbes. 1,0 ± 0,1; |
| Wasserabsorption nach ISO 62, 24 h bei 23 °C [%] | 0,9-1,7, insbes. 1,3 ± 0,2. |

Dem Dichtmittel 42 ist ein Farbstoff, vorzugsweise ein Fluoreszenzfarbstoff, beigemischt. Dies erlaubt eine einfache Kontrolle, ob die Dichtraupe vollständig aufgebracht wurde und die Vertiefung komplett mit dem Dichtmittel 42 gefüllt ist. Bei einer Bestrahlung mit UV-Licht ist aufgrund des fluoreszierenden Farbstoffs einfach zu erkennen, an welcher Stelle sich Dichtmittel 42 befindet. Wird ein nicht fluoreszierender Farbstoff verwendet, so ist für diesen eine andere Farbe als für den Sockel 32 beziehungsweise den Verschlusskörper 18 gewählt, so dass an Hand der Farbe zu erkennen ist, ob die Dichtraupe vollständig und umlaufend ist.

Die Kontrolle kann unter Einsatz einer Kamera vorgenommen werden.

Vor seiner Montage in ein Gassackmodul sind die Kontaktstifte 40 des Gasgenerators 10 über eine Kurzschlussbrücke 44 verbunden. Die Zündersteckeraufnahme 38, der Sockel 32 und das Dichtmittel 42 sind in diesem Zustand durch eine Laminatfolie 46 abgedeckt und so vor Umwelteinflüssen geschützt.

Die die Einbuchtung 34 bildende Wand ist abschnittsweise in radialer Richtung r gewölbt ausgebildet (siehe Fig. 3), und zwar so, dass eine oder mehrere Ausbauchungen 48, die sich in radialer Richtung von der Einbuchtung 34 weg erstrecken, gebildet sind. Der Gasgenerator 10 weist eine zentrale Achse A auf (siehe Figur 1). Bezogen auf diese zentrale Achse A verläuft die Wölbung, die die Ausbauchung 48 bildet, in diesem Beispiel ringförmig um die Einbuchtung 34.

Es ist auch möglich, die Ausbauchung 48 in Umfangsrichtung nicht durchgängig auszubilden und nur eine oder mehrere, separate Ausbauchungen 48 entlang des Umfangs der Einbuchtung 34 vorzusehen. Der Verlauf der Wand ist in Figur 3 mit gestrichelten Linien gezeigt. Die Wandstärke der Wand der Einbuchtung 34 ist hier unverändert gegenüber der Wandstärke außerhalb der Ausbauchung 48.

In dem in Figur 3 gezeigten Schnitt bildet die Wand der Einbuchtung 34 im Bereich einer Ausbauchung 48 eine S-förmige Kurve, wobei der Mündungsabschnitt (unteres axiales Ende) der die Einbuchtung 34 bildenden Wand nach außen verläuft.

Die Einbuchtung 34 weist neben dem ringförmigen Abschnitt 30 einen Bodenabschnitt 50 auf, der sich in Richtung zum Inneren des Gasgenerators 10 an den ringförmigen Abschnitt 30 anschließt. Der Bodenabschnitt 50 bildet auch den Rand der Öffnung 26. Am Bodenabschnitt 50 am Rand der Öffnung 26 ist zur Außenseite des Gasgenerators hin ein ringförmig umlaufender Vorsprung 52 ausgebildet (nur in Figur 3 mit Bezugszeichen versehen). Der Vorsprung 52 bildet eine konvexe Form und ist ohne scharfe Kanten geformt. Auf der gegenüberliegenden Seite (Innenseite) weist der Bodenabschnitt eine vorzugsweise im Profil rechteckige Vertiefung, die ebenfalls umlaufend um den Rand der Öffnung 26 verläuft und deren Öffnung ins Innere des Gasgenerators 10 gerichtet ist.

Sowohl die Nut 54 als auch der Vorsprung 52 werden beim Spritzgießen des Sockels 32 vom flüssigen Kunststoff umschlossen, so dass sich eine feste und dichte Verbindung zum Sockel 32 ausbildet, die auch Temperaturschwankungen standhält sowie während und nach dem Erstarren des Kunststoffs eine zusätzliche Halterung darstellt. Auch die Vertiefung 54 ist nur in Figur 3 mit Bezugszeichen gezeigt.

Im Inneren des Außengehäuses 12 ist eine ringförmige, also im Wesentlichen toroidale Brennkammer 56 gebildet (siehe Fig.1), die mit einem bekannten pyrotechnischen gaserzeugenden Mittel 58, hier angedeutet durch einige Tabletten, befüllt ist.

Zur Mittelachse A des Gasgenerators 10 hin wird die Brennkammer 56 durch eine Kappe 60 begrenzt, die den Anzünder 28 und den im Inneren des Gasgenerators 10 liegenden Abschnitt des Sockels 32 sowie zusätzlich einen Freiraum in Form einer Zwischenkammer 62 umschließt. Die Zwischenkammer 62 ist mit einer Verstärkerladung aus bekanntem pyrotechnischem, gaserzeugenden Material 64 gefüllt.

Die Kappe 60 (siehe Fig. 2) weist mehrere Überströmöffnungen 66 auf, die eine Verbindung zwischen der Zwischenkammer 62 und der Brennkammer 56 schaffen. In diesem Beispiel besteht die Kappe 60 aus Stahl. Sie ist am oberen Ende geschlossen und am unteren Ende offen und hat eine im Wesentlichen zylindrische Wand, in der die Überströmöffnungen 66 angeordnet sind. Die Kappe 60 ist am offenen Ende nach außen umgebogen, so dass ein kurzer Flansch 68 entsteht (siehe Figur 2). Nach Einbringen der Verstärkerladung 64 wird die Kappe 60 lediglich auf den Sockel 32 aufgeschoben und eventuell mit diesem verpresst oder unter Bildung eines Pressitzes aufgeschoben. Ein Festschweißen ist nicht vorgesehen. Dies führt dazu, dass sich bei der Aktivierung des Gasgenerators 10 und Zünden des Anzünders 28 die Kappe 60 sich in Richtung nach oben, also vom Anzünder 28 weg, verschieben kann. Hierdurch bewegen sich im Verlauf des Abbrandvorgangs auch die Überströmöffnungen 66 nach oben, d.h. relativ zum Treibsatz. Dadurch kommen weitere Bereiche des Treibstoffbetts in der Brennkammer 56 mit den aus der Zwischenkammer 62 ausströmenden heißen Gasen in Kontakt und werden gezündet.

Der in Figur 1 obere Bereich der Brennkammer 56, also auf der dem Anzünder 28 gegenüberliegenden Seite des Außengehäuses 12, ist mit einem elastischen Bauteil 70, hier einem Füllkörper oder Volumenausgleichselement versehen, der an der Oberseite des Diffusors 14 anliegt. Das elastische Bauteil 70 ist hier aus einem Maschengestrick aus Draht gebildet und ist komprimierbar, wenn sich die Kappe 60 bewegt. Ein weiterer Bewegungsspielraum für die Kappe 60 wird aus der Ausbauchung des Gasgenerators 10 während der Gasentwicklung gewonnen, bei der sich die Oberseite des Diffusors 14 leicht anhebt.

Das elastische Bauteil 70 hat eine zentrale Ausnehmung 72, in die die Kappe bis zu einem Absatz hineinragt und deren oberer Endabschnitt etwas kleiner ist als der Durchmesser der Kappe 60, um der Bewegung der Kappe 60 einen definierten Verschiebewiderstand entgegenzusetzen.

In diesem Fall bildet die Kappe 60 die einzige Trennwand zwischen der Zwischenkammer 62 und der Brennkammer 56. Es ist möglich, dass die Kappe 60 innenseitig mit einer Schutzfolie 74 ausgekleidet ist, die vor der Aktivierung des Gasgenerators 10 die Überströmöffnungen 66 verschließt, wobei die Schutzfolie 74 bei der Zündung des Anzünders 28 zerstört wird.

Im Zustand vor der Aktivierung, der in Figur 1 gezeigt ist, liegen die Überströmöffnungen 66 direkt an der Oberkante des Sockels 32, so dass sie einen möglichst großen Verschiebeweg in Richtung der zentralen Achse A haben.

Ein Filter 76 ist in der Brennkammer 56 angeordnet, der hier ringförmig, im Wesentlichen zylindrisch ausgebildet ist und parallel zur Umfangswand 16 des Diffusors 14 mit einem geringen radialen Abstand zu dieser verläuft.

Der Filter 76 erstreckt sich über die gesamte Höhe des Gasgenerators 10 und reicht hier vom Verschlusskörper 18 bis zur Stirnseite des Diffusors 14. Der Filter 76 ist aus einem Drahtgestrick oder Drahtgewirk mit unterschiedlich dicken Drähten gebildet.

In der Umfangswand 16 des Diffusors 14 sind mehrere, in diesem Beispiel zwölf, Ausströmöffnungen 78 ausgebildet, die gleichmäßig über den Umfang des Diffusors 14 verteilt und auf einer axialen Höhe angeordnet sind. Der Filter 76 trennt die Ausströmöffnungen 78 von der Brennkammer 56, so dass der Filter 76 stromaufwärts der Ausströmöffnungen 78 liegt.

Der Filter 76 ist unter axialer Vorspannung in das Außengehäuse 12 eingepresst.

Der Filter 76 weist zwei axiale Enden 80, 82 auf, von denen wenigstens ein Ende nach außen abgewinkelt ist. In diesem Fall ist der abgewinkelte Bereich das untere axiale Ende 80 und die Abwinkelung verläuft geradlinig. Der Filter 76 hat im abgewinkelten Bereich die gleiche Dicke, die er auch in einem mittleren Bereich hat, der an den abgewinkelten Bereich angrenzt.

Im gezeigten Beispiel verläuft der Filter 76 im axialen Schnitt gesehen S-förmig. Auch am oberen axiale Ende 82 ist nämlich eine leichte Abwinkelung vorgesehen, die sich jedoch zur Mitte des Gasgenerators 10 hin erstreckt (in Figur 1 auf der linken Hälfte mit gestrichelten Linie angedeutet).

Beim Filter 76liegt die radial Innerste Anlagestelle des nach außen abgewinkelten unteren axialen Endes 80 radial weiter außen als die radial äußerste Anlagestelle des nach innen abgewinkelten axialen Endes 82, so dass die stirnseitigen Anlageflächen seitlich vollständig versetzt sind.

Der abgewinkelte Bereich am unteren axiale Ende 80 liegt in einer durch das Gehäuse des Gasgenerators 10 gebildete Ecke an. In diesem Fall ist das Gehäuseteil durch den Verschlusskörper 18 gebildet, und das untere axiale Ende 80 des Filters 76 liegt am Übergang von einer Bodenplatte des Verschlusskörpers 18 zum hochgebogenen Rand 20 desselben an.

Am oberen axialen Ende 82 verjüngt sich der Filter 76, wie dies insbesondere auf der rechten Seite der Figur 1 zu erkennen ist. An diesem Ende weist der Filter 76 volumenbezogen eine größere Länge dünner Drähte auf als im angrenzenden Bereich und vorzugsweise als im restlichen Filter, was den verjüngten Bereich sehr flexibel macht.

Diese Formgebung erlaubt es, das Material beim axialen Einpressen in den Gasgenerator so zu verformen, dass kein Bypass für eventuell beim Abbrand des pyrotechnischen Materials 58 entstehende Partikel entsteht.

Das pyrotechnische Material 58 in der Brennkammer 56 ist auf allen Seiten von Metall umgeben, d.h., die aus mehreren Teilen zusammengesetzte Brennkammerwand besteht durchgehend aus demselben Material. Die Brennkammer 56 wird durch den elastischen Füllkörper 70, den Filter 76, die Kappe 60 sowie den Verschlusskörper 80 umschlossen. Vorzugsweise bestehen, wie gesagt, alle diese Bauteile aus demselben Metall, bevorzugt aus dem gleichen Stahl.

Die Ausströmöffnungen 78 sind vor der Aktivierung des Gasgenerators 10 durch eine Verdämmung 84 in Form einer Verdämmfolie verschlossen. Die Verdämmung 84 ist umlaufend an der Innenseite der Umfangswand 16 des Diffusors 14 auf Höhe der Ausströmöffnungen 78 angebracht und überdeckt sämtliche Ausströmöffnungen 78. Die Höhe der Verdämmung 84 beträgt hier etwa das Vierfache des Durchmessers der Ausströmöffnungen 78.

Das untere Ende der Verdämmung 84, also das dem Verschlusskörper 18 zugewandten Ende, ist mit Abstand zur Schweißnaht 22, die den Diffusor 14 mit dem Verschlusskörper 18 verbindet, angeordnet. Der Abstand a zur Schweißnaht 22, oder in diesem Fall gleichbedeutend zum Ende des oberen Rand 20 des Verschlusskörpers 18, beträgt im gezeigten Fall etwa 5,5 mm und liegt vorzugsweise zwischen 3 und 7 mm (siehe Fig. 1). Dieser Abstand ist ausreichend, um einen unerwünschten Wärmeübertrag beim Schweißen auf die Verdämmung 84 zu verhindern.

Das Außengehäuse 12 des Gasgenerators 10 weist eine relativ dünne Wandstärke auf, die bei dem hier gezeigten Beispiel an keiner Stelle 2 mm überschreitet. Insbesondere beträgt die Wandstärke des Diffusors 1,5 mm und die des Verschlusskörpers 1,9 mm. Diese Wandstärken sind ausreichend, um einem Brennkammerdruck bei der Aktivierung des Gasgenerators 10 von 300 bar standzuhalten.

Der Diffusor 14 und der Verschlusskörper 18 sind nur über die Schweißnaht 22 miteinander verbunden, so dass diese Schweißnaht 22 die einzige festigkeitbestimmende Verbindung zwischen den Bauteilen des Außengehäuses 12 bildet. Ein Zuganker ist vorzugsweise nicht vorgesehen.

Das Verhältnis von maximalem Brennkammerdruck zur Wandstärke liegt hier vorzugsweise zwischen 150 und 220 bar/mm.

Das Verhältnis der gesamten Ausströmfläche des Gasgenerators 10, also der Summe der Flächen sämtlicher Ausströmöffnungen 78, zur Wandstärke ist hier größer als 30, insbesondere größer als 34 mm.

Das Verhältnis des Durchmessers D des Diffusors, gemessen am Durchmesser der Umfangswand 16, zur kleinsten Wandstärke des Außengehäuses ist vorzugsweise kleiner als 50, und liegt vorzugsweise zwischen 35 und 45. Der Flansch 24 wird bei der Durchmesserbestimmung nicht berücksichtigt.

Der Gasgenerator 10 hat im Wesentlichen die Form eines flachen Zylinders, wobei das Verhältnis Durchmesser D zu größter axialer Höhe H etwa 1,8 ± 0,2, vorzugsweise 1,8 ± 0,1 beträgt.

Der Flansch 24 am Außenumfang des Diffusors 14 ist plan, aber unsymmetrisch gestaltet (siehe Fign. 4a und b). Diese Gestaltung bietet eine Positionierungshilfe beim Einbau des Gasgenerators 10 in ein Modul, beispielsweise ein Gassackmodul, indem die Einbaulage eindeutig vorgegeben wird.

Im vorliegenden Beispiel sind als Einbaupositioniermittel 86 über den Umfang des Flansches 24 drei Kerben verteilt, und zwar in unterschiedlichen Winkelabständen. Die Winkel zwischen den Kerben betragen beispielsweise 115 und 148°, oder in einem anderen Beispiel 93 und 109°.

Als zusätzliches oder alternatives Einbaupositioniermittel ist eine Öffnung 88 in Form eines Langlochs im Flansch 84 ausgebildet. Diese Öffnung 88 ist die einzige Öffnung, die im Flansch 84 vorgesehen ist.

Es können natürlich auch mehr oder weniger Kerben 86 oder Vorsprünge an Stelle der Kerben oder andere geeignete Einbaupositioniermittel 86 vorgesehen sein.

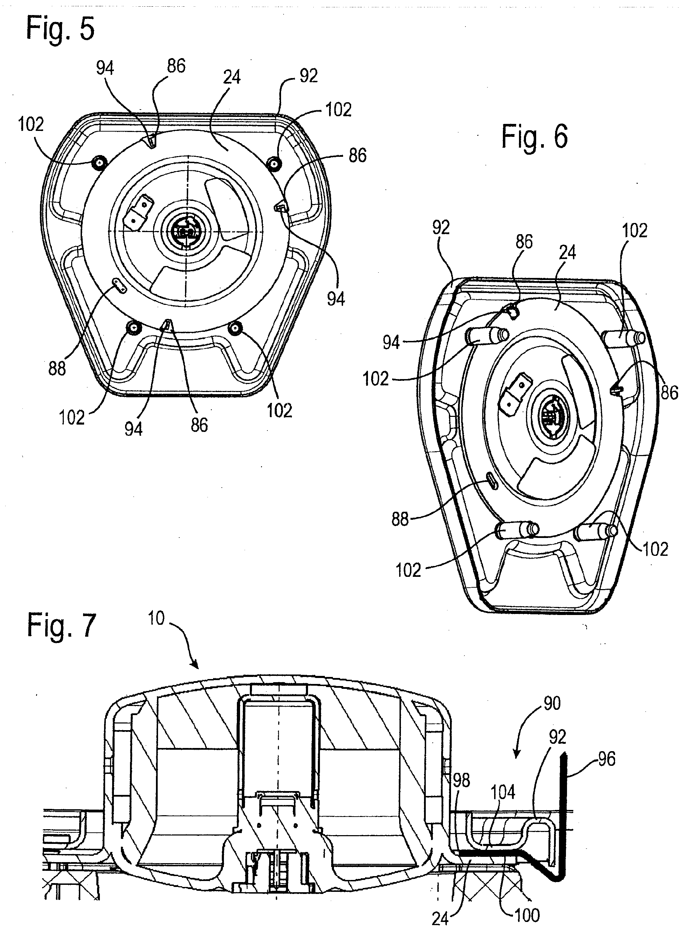

Beim Einbau des Gasgenerators 10 in ein Modul, zum Beispiel ein in Figur 7 gezeigtes Gassackmodul 90, wird der Gasgenerator 10 durch ein Klemm- oder Halteelement 92 befestigt (siehe auch Figuren 5 bis 7). Das Halteelement 92 weist eine zentrale Öffnung auf, durch die sich der Gasgenerator 10 teilweise hindurch erstreckt, so dass das Halteelement 92 gegen den Flansch 24 drückt. Das Halteelement 92 weist entsprechende Einbaupositioniermittel 94 auf, die komplementär zu den Einbaupositioniermitteln 86 des Flansches 24 des Gasgenerators 10 sind. In diesem Fall sind die Einbaupositioniermittel 94 durch einstückig angeformte Vorsprünge im Halteelement 92 gebildet, zum Beispiel in Form von ausgeschnittenen und aufgebogenen Blechabschnitten. Die Vorsprünge greifen in die Kerben ein und geben so die Einbaulage des Gasgenerators 10 eindeutig vor.

Die Öffnung 88 im Flansch 24 dient zur Festlegung der Einbaulage eines Gassacks 96 (angedeutet in Figur 7), der mit dem Öffnungsrand 100 seiner Einblasöffnung 98 zwischen dem Flansch 24 und dem Halteelement 92 geklemmt ist.

Das Langloch 88 ist darüber hinaus auch bei der Gasgeneratorfertigung verwendbar. Insbesondere kann bei verschiedenen Fertigungsschritten durch einen Stift im Werkzeugträger, der mit dem Langloch in Eingriff bringbar ist, die richtige Positionierung des Diffusors (Flansches) zu anderen Gasgeneratorbauteilen sichergestellt werden, z.B. zur Orientierung bei den Anzünderpins.

Der Gassack 96 weist am Öffnungsrand 100 ebenfalls eine Öffnung auf (nicht gezeigt), die in Deckung mit der Öffnung 88 im Flansch gebracht wird, um den Gassack 96 richtig zu positionieren. Die Öffnung 88 dient nicht als Durchschrauböffnung und ist die einzige Öffnung am Öffnungsrand 100 des Gassacks 96. Das bedeutet, die Klemmung des Gassacks 96 zwischen Flansch 24 und Halteelement 92 erfolgt durch Befestigungsmittel, üblicherweise Schraubbolzen, die außerhalb des Flansches 24 liegen. Damit wird die Flanschfläche optimiert.

Zur Befestigung des Gassackmoduls 90 weist das Halteelement 92 Befestigungsbolzen 102 auf, im gezeigten Beispiel vier an der Zahl, über die das Gassackmodul 90 mit einem Fahrzeug (nicht gezeigt) verbunden werden kann. Die Befestigungsbolzen 102 liegen am Außenumfang des Flansches 24 an, jedoch abseits des Bereichs der Einbaupositioniermittel 86.

Der Flansch 24 ist umlaufend und plan ausgebildet.

Er bildet eine ringförmige Klemmfläche für den Gassack 96, wobei die Breite B des Flansches (der Übergangsradius zwischen dem planen Flanschabschnitt und der Umfangswand des Diffusors 14 zwischen 5 und 12%, vorzugsweise zwischen 8 und 11% des maximalen Durchmessers D des Außengehäuses 12 beträgt.

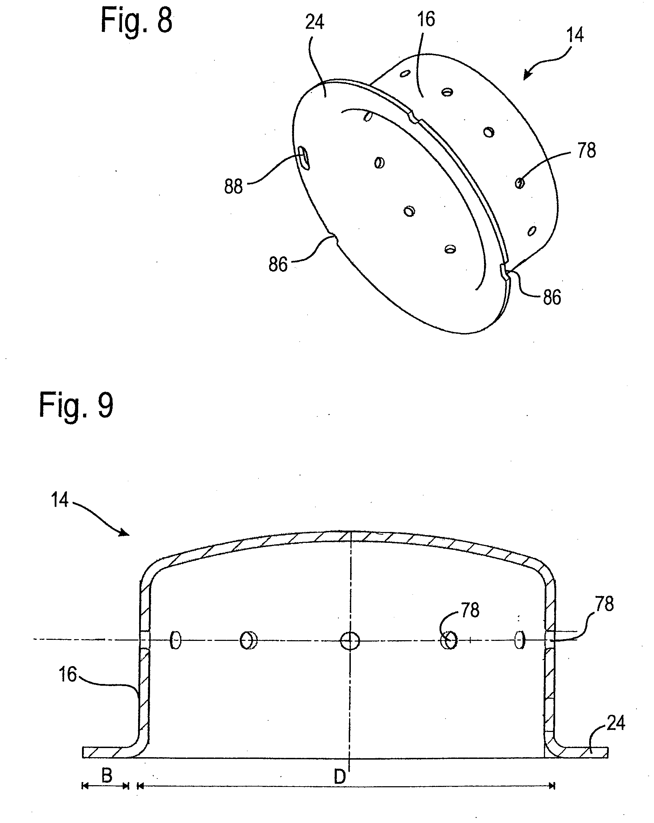

Die Breite B der Klemmfläche in radialer Richtung r beträgt zwischen 5 und 8,5, vorzugsweise zwischen 5,5 und 7,5 mm (siehe Fig. 9)

Am Halteelement 92 ist gegenüber der Klemmfläche am Flansch 24 ein Klemmabschnitt 104 definiert (siehe Fig. 7), der zusammen mit der Klemmfläche am Flansch 24 eine Haltekraft für den Gassack 96 erzeugt. Die Klemmfläche und der Klemmabschnitt 104 sind so ausgebildet, dass die durch den maximalen Innendruck im Gassacks 96 auf den Öffnungsrand 100 wirkenden Kräfte um 20 bis 50% geringer sind als die zwischen Klemmfläche und Klemmelement 104 erzeugte Klemmkraft. Durch diese sehr einfache Maßnahme lässt sich die Breite B des Flansches 24 erheblich reduzieren, sozusagen auf die minimale Flanschbreite.

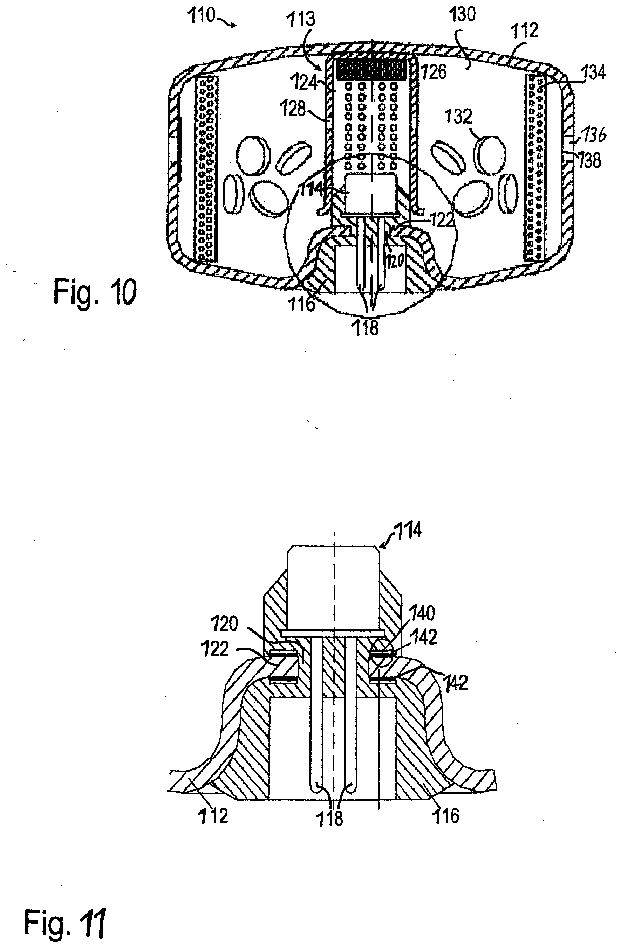

Figur 10 zeigt eine besondere Ausführungsform eines erfindungsgemäßen Gasgenerators 110, der ein erstes Bauteil 112, hier aus Metall, in Form eines Gasgeneratorgehäuses aufweist, in dem mittig eine Zündervorrichtung 113 angeordnet ist. Diese umfasst einen Anzünder, der ein zweites Bauteil 114 darstellt, das über einen gespritzten Kunststoffsockel 116 mit dem ersten Bauteil 112 verbunden ist, indem beide Bauteile wenigstens teilweise gemeinsam umspritzt sind. Der Anzünder ist hier ein vorgefertigtes, durch eine metallische Außenhülle abgeschlossenes Bauteil und hat mehrere zum Teil in den Kunststoffsockel 116 eingebettete Anschlussleitungen 118, die durch eine Öffnung 120 im ersten Bauteil 112 (dem Gasgeneratorgehäuse) aus letzterem herausragen. Die Öffnung 120 dient gleichzeitig zur Aufnahme und Befestigung des zweiten Bauteils 114 (des Anzünders), wobei insbesondere der den Rand 122 der Öffnung 120 bildende Abschnitt des ersten Bauteils 112 beim Spritzen in den Kunststoffsockel 116 eingebettet wird.

Das in der Figur 10 obere Ende des Anzünders grenzt an eine mit einer Verstärkerladung gefüllte Verstärkerkammer 124 an. Bei der gezeigten Ausgestaltung ist eine die Verstärkerkammer 124 begrenzende Hülse 126, die mehrere Überströmöffnungen 128 hat, auf den Anzünder bzw. den Kunststoffsockel 116 aufgesetzt. Die Verstärkerkammer 124 ist von einer Brennkammer 130 umgeben, die mit einem schematisch gezeigten Treibstoff 132 in Tablettenform gefüllt ist und außenseitig an einen Filter 134 angrenzt. Das Gasgeneratorgehäuse weist an seiner Umfangswand Ausströmöffnungen 136 auf, die im Einbauzustand durch eine Verdämmfolie 138 vor Feuchteeintritt geschützt sind. Bei Aktivierung des Gasgenerators 110 wird in bekannter Weise ein Gas erzeugt, welches durch die Ausströmöffnungen 136 nach außen gelangt und z.B. dazu dient, einen Gassack eines Fahrzeuginsassen-Rückhaltesystems zu befüllen.

In dem nahe der Öffnung 120 bzw. das Randes 122 gelegenen Kontaktbereich 140 zwischen dem Kunststoffsockel 116 und dem ersten Bauteil 112 ist letzteres mit einer Klebefolie 142 versehen, die bereits vor dem Spritzen des Kunststoffsockels 116 aufgebracht wurde. Die Klebefolie 142 bedeckt nur einen Abschnitt des umspritzten Bereichs des ersten Bauteils 112. Die Klebefolie 142 läuft aber am Rand 122 geschlossen um.

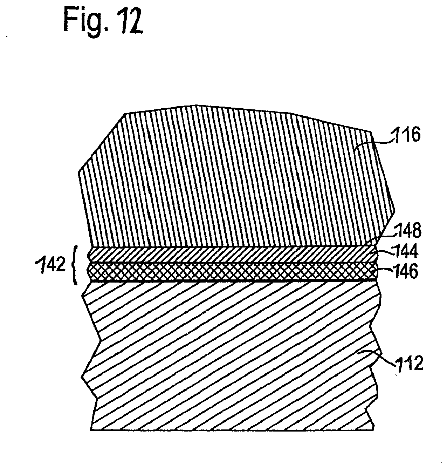

Die Klebefolie 142 ist ein vorab hergestelltes Bauteil und besteht aus einer Kunststofffolie 144 und einer darauf direkt und gleichmäßig aufgebrachten Klebstoffschicht 146 (siehe Fig. 12).

Als Material für die Kunststofffolie 144 wird in diesem Beispiel das gleiche Material verwendet wie für den Kunststoffsockel 116. Es ist aber auch möglich, ein anders Material einzusetzen, das geeignet ist, eine feste Verbindung mit dem Material des Kunststoffsockels 116 einzugehen. Dabei kann es sich etwa um ein thermoplastisches Elastomer handeln.

Die Klebefolie 142 dient als Haftbrücke zwischen dem Kunststoffsockel 116 und dem ersten Bauteil 112.

Abweichend von der gezeigten Ausgestaltung kann sich die Fläche der Klebefolie 142 natürlich auch über den gesamten umspritzten Abschnitt des Bauteils 112 erstrecken oder über diesen hinausragen. Ebenso ist es denkbar, auch zwischen dem zweiten Bauteil 114 und dem Kunststoffsockel 116 eine entsprechende Klebefolie vorzusehen.

Die Herstellung des Gasgenerators 110 erfolgt folgendermaßen: Zunächst werden das erste Bauteil 112 (das Gasgeneratorgehäuse) sowie das zweite Bauteil 114 (der Anzünder) bereitgestellt, und das erste Bauteil 112 wird im späteren Verbindungsbereich der Bauteile (der gerade dem Kontaktbereich 140 entspricht) mit der Klebefolie 142 versehen, indem ein oder mehrere entsprechend zugeschnittene Stücke der Klebefolie 142 an die entsprechende Stellen des ersten Bauteils 112, hier beidseitig im Bereich des Randes 122, mit der Klebstoffschicht 146 aufgeklebt werden.

Der Klebstoff der Klebstoffschicht 146 kann bereits jetzt durch den Anpressdruck beim Aufkleben aktiviert bzw. ausgehärtet werden. Alternativ erfolgt das Aktivieren bzw. Aushärten durch Erwärmen, was z.B. während des Umspritzens durch die Wärmeeinwirkung durch den flüssigen Kunststoff geschieht.

Nachdem die Klebefolie 142 auf das erste Bauteil 112 aufgeklebt wurde, wird das zweite Bauteil 114 relativ zum ersten Bauteil 112 positioniert, und beide Bauteile 112, 114 werden gemeinsam unter Bildung des Kunststoffsockels 116 umspritzt, wobei beide Bauteile 112, 114 zumindest teilweise in den Kunststoffsockel 116 eingebettet werden.

Beim Umspritzen verbindet sich das Material der Kunststofffolie 144 mit dem eingespritzten Kunststoff, indem eine Oberflächenschicht der Kunststofffolie 144 in einer Verbindungszone 148 mit dem Kunststoffsockel 116 verschmilzt. Alternativ kann in der Verbindungszone 148 auch eine chemische Reaktion zwischen dem Material der Kunststofffolie 144 und dem des Kunststoffsockel 116 stattfinden, die die Kunststofffolie 144 und den Kunststoffsockel fest und unlösbar miteinander verbindet.

Die Klebstoffschicht 146 bildet eine Haftbrücke zwischen dem ersten Bauteil 112 und dem Kunststoffsockel 116, die elastisch und/oder plastisch verformbar ist, so dass Spannungen und Scherkräfte ausgeglichen werden, die aufgrund der unterschiedlichen thermischen Ausdehnungskoeffizienten der verschiedenen Materialien auftreten. Die Klebstoffschicht 146 wirkt dabei auch als Dichtung zwischen dem ersten Bauteil 112 und dem Kunststoffsockel 116.

Alle beschriebenen Merkmale lassen sich im Ermessen des Fachmanns miteinander kombinieren oder gegeneinander austauschen.

Im Folgenden wird die Erfindung nochmals anhand bevorzugter Ausführungsformen und darin verwirklichter Merkmale naher erläutert, wobei die Merkmale einzelner Ausführungsformen beliebig untereinander, und insbesondere auch mit Merkmalen anderer Ausführungsformen, kombinierbar sind:
Gemäß einer Ausführungsform betrifft die Erfindung einen Gasgenerator 10, insbesondere für eine Schutzeinrichtung in einem Fahrzeug, mit mehreren Teilen, wobei im Bereich aneinanderstoßender Teile ein Dichtmittel 42 aufgebracht ist, insbesondere ein Dichtmittel 42, das auf beiden aneinanderstoßenden Teilen haftet.

Bevorzugt ist, dass die aneinanderstoßenden Teile jeweils zumindest einen Teil der äußeren Gasgeneratoroberfläche bilden und/ oder aus unterschiedlichen Materialien, insbesondere einerseits aus Kunststoff und andererseits aus Metall, bestehen.

Bevorzugt ist, dass das aus Kunststoff bestehende Teil eine teilweise Umspritzung des Teiles aus Metall bildet.

Bevorzugt ist, dass das aus Kunststoff bestehende Teil ein Sockel 32 für einen Anzünders 28 ist.

Bevorzugt ist, dass der Sockel 32 einen vorgefertigten Anzünder 28 abschnittsweise einbettet.

Bevorzugt ist, dass der Sockel 32 eine Anzündersteckeraufnahme 38 ausbildet.

Bevorzugt ist, dass das aus Metall bestehende Teil ein Außengehäuseteil des Gasgenerators 10 ist.

Bevorzugt ist, dass das aus Kunststoff bestehende Teil an den Rand einer Öffnung 26 im Außengehäuseteil angespritzt ist, insbesondere um dieses zu schließen.

Bevorzugt ist, dass das Dichtmittel 42 von außerhalb des Gasgenerators 10 an den Übergangsrand der aneinanderstoßenden Teile aufgebracht ist.

Bevorzugt ist, dass das Dichtmittel 42 in eine am Übergang der aneinanderstoßenden Teile vorgesehene Vertiefung 54 eingebracht ist.

Bevorzugt ist, dass das Dichtmittel 42 im Auftragszustand flüssig ist und/oder ein Kleber, insbesondere Acrylatkleber ist.

Bevorzugt ist, dass das Dichtmittel 42 flüssig aufbringbar und anschließend insbesondere mit UV-Licht aushärtbar ist.

Bevorzugt ist, dass das Dichtmittel 42 wenigstens eine der folgenden Eigenschaften besitzt: Bruchfestigkeit nach ISO 527 [MPa]:2-4, insbes. 3; Reiß- oder Bruchdehnung nach ISO 527 [%]:200-400, insbes. 300 ± 40; Viskosität bei 23°C nach Brookfield Sp/U und 3/100 [mPas] 400-800, insbes. 600 ± 80; Glasumwandlungstemperatur Rheometer [°C] 10-30, insbes. 20 ± 4; Therm. Expansionskoeffizient bei 30-140°C [ppm/K] 150-350, insbes. 260±30; Dichte bei 23 °C [g/cm³] 0,6-1,5, insbes. 1,0 ± 0,1; Wasserabsorption nach ISO 62, 24 h bei 23 °C [%] 0,9-1,7, insbes. 1,3 ± 0,2.

Bevorzugt ist, dass das Dichtmittel 42 einen Farbstoff, insbesondere einen fluoreszierenden Farbstoff, enthält, und/oder einen vom Kunststoff des Teiles, an dem das Dichtmittel 42 angebracht ist, abweichenden Farbstoff.

Es wird erfindungsgemäß ein Verfahren zum Kontrollieren der Dichtigkeit eines Gasgenerators 10 vorgeschlagen, insbesondere mittels Verwendung einer Kamera, wobei die vom Dichtmittel 42 gebildete Dichtraupe mit UV-Licht bestrahlt wird.

Gemäß einer Ausführungsform betrifft die Erfindung einen Gasgenerator 10, insbesondere für eine Schutzeinrichtung in einem Fahrzeug mit einem stromaufwärts von Ausströmöffnungen 78 angeordneten, ringförmigen Filter 76, der zwei axiale Enden aufweist, wobei der Filter an einem seiner axialen Enden 80,82 nach außen abgewinkelt, insbesondere geradlinig abgewinkelt ist.

Bevorzugt ist, dass der Filter 76 im abgewinkelten Bereich dieselbe Dicke wie in einem mittleren Bereich, der an den abgewinkelten Bereich angrenzt, aufweist.

Bevorzugt ist, dass die Filterwand im axialen Querschnitt gesehen zwischen den Enden im wesentlichen S-förmig verläuft.

Bevorzugt ist, dass der abgewinkelte Bereich in einem Eckbereich des Gasgenerators 10, der von einer Umfangswand 16 und einem Boden gebildet ist, anliegt.

Bevorzugt ist, dass der Filter 76 axial verspannt im Gasgenerator 10 positioniert ist und/ oder aus einem Drahtgeflecht von Drähten mit im Wesentlichen gleichem Querschnitt besteht.

Bevorzugt ist, dass der Filter 76 von in einem Außengehäuse 12 des Gasgenerators 10 vorgesehenen stromabwärtigen Ausströmöffnungen 78 seitlich beabstandet ist.

Bevorzugt ist, dass der Filter 76 an einem axialen Ende 80,82, vorzugsweise an dem zum abgewinkelten Ende 80 entgegengesetzten Ende, verjüngt ausläuft.

Bevorzugt ist, dass der Filter 76 an seinen axialen Enden 80,82, insbesondere an den Stirmseiten, an Gasgeneratorteilen anliegt und die radial innerste Anlagestelle des abgewinkelten Endes am zugeordneten Gasgeneratorteil radial weiter außen liegt als die radial äußerste Anlagestelle des entgegengesetzten axialen Endes 80,82 am zugeordneten Gasgeneratorteil.

Bevorzugt ist, dass der Filter 76 aus verschieden dicken Drähten gebildet ist.

Bevorzugt ist, dass der Filter 76 ein verjüngt auslaufendes axiales Ende 82 hat, in dessen Bereich der Filter 76 volumenbezogen eine größere Länge dünner Drähte aufweist als im angrenzenden Bereich, vorzugsweise im gesamtem restlichen Bereich.

Gemäß einer Ausführungsform betrifft die Erfindung einen Gasgenerator 10, insbesondere für eine Schutzeinrichtung in einem Fahrzeug, mit wenigstens einem Anzünder 28, insbesondere in Form eines vorgefertigten Bauteils, und einer Brennkammer 56, die zumindest teilweise mit pyrotechnischem Material 58 gefüllt ist, das über wenigstens eine Überströmöffnung 66 anzündbar ist, dadurch gekennzeichnet, dass die Überströmöffnung 66, insbesondere nach Aktivieren des Anzünders 28 zum Anzünden des pyrotechnischen Materials 58, relativ zu diesem bewegbar ist.

Bevorzugt ist, dass die Überströmöffnung 66 in einer verschiebbaren Wand vorgesehen ist.

Bevorzugt ist eine, insbesondere eine Verstärkerladung 64 aufnehmende, Zwischenkammer 62, die an den Anzünder 28 angrenzt und die durch eine Kappe 60 von der Brennkammer 56 getrennt ist, wobei die Kappe 60 mit der Überströmöffnung 66 versehen und so im Gasgenerator 10 angeordnet ist, dass sie durch Aktivieren des Anzünders 28 verschiebbar ist.

Gemäß einer Ausführungsform betrifft die Erfindung einen Gasgenerator 10, insbesondere für eine Schutzeinrichtung in einem Fahrzeug, mit wenigstens einem Anzünder 28, insbesondere in Form eines vorgefertigten Bauteils, und einer, insbesondere eine Verstärkerladung 64 aufnehmenden, Zwischenkammer 62, die an den Anzünder 28 angrenzt und die durch eine Kappe 60 begrenzt ist, dadurch gekennzeichnet, dass die Kappe 60 mit ihrem zünderseitigen, offenen Ende auf einen Sockel 32 aufgeschoben ist.

Bevorzugt ist, dass die Kappe 60 mit dem Sockel 32 verpresst oder auf ihn unter Bildung einer Presspassung aufgesteckt ist.

Bevorzugt ist, dass die Kappe 60 so am Sockel 32 angebracht ist, dass sie durch Aktivierung des Anzünders 28 verschiebbar ist.

Bevorzugt ist, dass die Kappe 60 im nicht aktivierten Zustand des Gasgenerators 10 stirnseitig an ein elastisches Bauteil 70, insbesondere an einen elastischen Füllkörper, angrenzt, wobei der Füllkörper vorzugsweise eine Ausnehmung 72 aufweist, in die die Kappe 60 abschnittsweise ragt.

Bevorzugt ist, dass das elastische Bauteil 70 durch die Bewegung der Kappe 60 komprimierbar ist.

Bevorzugt ist, dass das elastische Bauteil 70 ein Filter, insbesondere aus Maschengestrick oder -gewirk, ist und dass das elastische Bauteil 70 vorzugsweise innenseitig an einer Stirnwand des Gasgenerators 10 anliegt.

Bevorzugt ist, dass der Sockel 32 durch Umspritzen des Anzünders 28 gebildet und vorzugsweise dafür vorgesehen ist, den Anzünder 28 am Gasgenerator 10 zu fixieren.

Bevorzugt ist, dass die Kappe 60 die, vorzugsweise einzige, Trennwand zwischen der Zwischenkammer 62 und einer, insbesondere zumindest teilweise mit pyrotechnischem Material 58 gefüllten, Brennkammer 56 bildet.

Bevorzugt ist, dass die Kappe 60 wenigstens eine seitliche Überströmöffnung 66 aufweist.

Gemäß einer Ausführungsform betrifft die Erfindung einen Gasgenerator 10, insbesondere für eine Schutzeinrichtung in einem Fahrzeug, mit einem Außengehäuse 12, vorzugsweise mit einer zentralen Achse, und einem in einen Sockel 32 eingebetteten Anzünder 28, wobei das Außengehäuse 12 oder ein mit dem Außengehäuse 12 verbundenes Teil eine Einbuchtung 34 aufweist, in die sich der Sockel 32 erstreckt, und die die Einbuchtung 34 bildende Wand abschnittsweise nach innen gewölbt ist und entfernt von der Mündung der Einbuchtung 34 eine nach außen verlaufende Ausbauchung 48 gebildet ist.

Bevorzugt ist, dass die Wölbung ringförmig umläuft, vorzugsweise bezogen auf die zentrale Achse.

Bevorzugt ist, dass die die Einbuchtung 34 bildende Wand angrenzend an die Wölbung die gleiche Wandstärke wie in dem gewölbten Bereich aufweist.

Bevorzugt ist, dass, in einem Axialschnitt gesehen, die Einbuchtung 34 eine S-Form aufweist, wobei der Mündungsabschnitt der die Einbuchtung 34 bildenden Wand nach außen verläuft.

Gemäß einer Ausführungsform betrifft die Erfindung einen Gasgenerator 10, insbesondere für eine Schutzeinrichtung in einem Fahrzeug, mit einem Außengehäuse 12, vorzugsweise mit einer zentralen Achse, und einem in einen Sockel 32 eingebetteten Anzünder 28, wobei das Außengehäuse 12 oder ein mit dem Außengehäuse 12 verbundenes Teil eine Einbuchtung 34 aufweist, in die sich der Sockel 32 erstreckt, und wobei eine die Einbuchtung 34 bildende Wand einen Bodenabschnitt 50 mit einer Öffnung 26 aufweist, durch die sich der Sockel 32 hindurch erstreckt, wobei der Bodenabschnitt 50 auf seinen entgegengesetzten Außenseiten in dem Bereich, in dem der Sockel 32 an ihm anliegt, zumindest einen Vorsprung 52 und/oder eine Vertiefung 54 aufweist.

Bevorzugt ist, dass der Rand der Öffnung 26 auf einer Außenseite einen konvex geformten Vorsprung aufweist, wobei vorzugsweise der Vorsprung 52 durch einen umlaufenden Wulst gebildet ist.

Bevorzugt ist, dass der Bodenabschnitt 50 auf der dem Vorsprung 52 entgegengesetzten Außenseite im Bereich des Vorsprungs 52 eine insbesondere ringförmig umlaufende Vertiefung 54 besitzt.

Bevorzugt ist, dass auf jeder der Außenseiten in dem Bereich, in dem der Sockel 32 an ihm anliegt, zumindest ein Vorsprung 52 und/oder zumindest eine Vertiefung 54 ausgebildet ist, wobei der zumindest eine Vorsprung 52 und/oder die zumindest eine Vertiefung 54 sich vorvorzugsweise ringförmig um die Öffnung 26 erstrecken, und/ oder wobei vorzugsweise die in der dem Anzünder 28 zugewandten Außenseite ausgebildete Vertiefung 54 radial innerhalb der auf der gegenüberliegenden Außenseite ausgebildeten Vertiefung angeordnet ist. Bevorzugt ist, dass der Sockel 32 durch zumindest abschnittsweises Umspritzen der die Einbuchtung 54 bildenden Wand gebildet ist und/ oder aus Kunststoff gebildet ist.

Gemäß einer Ausführungsform betrifft die Erfindung einen Gasgenerator 10, insbesondere für eine Schutzeinrichtung in einem Fahrzeug mit einem Außengehäuse 12, das an seinem Außenumfang einen Flansch 24 aufweist, wobei der Flansch 24 unsymmetrisch ausgebildet ist, um eine eindeutige Einbaulage zumindest in Verdrehrichtung bei der Befestigung des Gasgenerators 10 sicherzustellen.

Bevorzugt ist, dass im Flansch 24 wenigstens eine Kerbe als Einbaupositioniermittel 86 vorgesehen ist.

Bevorzugt ist, dass mehrere, insbesondere zwei, drei, oder vier Kerben vorgesehen sind, die in unterschiedlichen Winkelabständen entlang des Umfangs des Flansches 24 angeordnet sind.

Bevorzugt ist, dass als Einbaupositioniermittel 86 eine Positionierungsöffnung, insbesondere ein Langloch 88, im Flansch 24 vorgesehen ist.

Gemäß einer Ausführungsform betrifft die Erfindung ein Modul mit einem Gasgenerator 10 mit einem Halteelement 92, das ein mit dem Einbaupositioniermittel 86 des Flansches 24 in Eingriff kommendes Gegenstück aufweist.

Bevorzugt ist, dass das Gegenstück wenigstens einen am Halteelement 92 ausgebildeten Vorsprung umfasst.

Bevorzugt ist, dass das Halteelement 92 wenigstens einen Befestigungsbolzen 102 aufweist, wobei der Befestigungsbolzen 102 am Außenumfang des Flansches 24 anliegt.

Bevorzugt ist, dass der Befestigungsbolzen 102 nicht im Bereich des Einbaupositioniermittels 86 am Flansch 24 anliegt.

Gemäß einer Ausführungsform betrifft die Erfindung ein Modul, insbesondere ein Gassackmodul 90, bei dem ein Gassack 96 vorgesehen ist, der eine Einlassöffnung 98 aufweist, wobei der Rand der Einlassöffnung 98 zwischen dem Flansch 24 und dem Halteelement 92 geklemmt ist.

Gemäß einer Ausführungsform betrifft die Erfindung einen Gasgenerator 10, insbesondere für eine Schutzeinrichtung in einem Fahrzeug, mit einer zumindest teilweise mit pyrotechnischem Material 58 gefüllten Brennkammer 56, die von Brennkammerwänden begrenzt ist, dadurch gekennzeichnet, dass sämtliche Brennkammerwände aus demselben Metall, insbesondere Stahl, insbesondere demselben Stahl, bestehen.

Bevorzugt ist, die Brennkammerwände durch mehrere miteinander verbundene Teile gebildet sind, wobei die Teile insbesondere tragende Teile sind.

Bevorzugt ist, dass die Brennkammer 56 eine Ringkammer ist.

Bevorzugt ist, dass die axiale Höhe des Gasgenerators 10 geringer als sein Durchmesser ist.

Gemäß einer Ausführungsform betrifft die Erfindung einen Gasgenerator 10, insbesondere für eine Schutzeinrichtung in einem Fahrzeug, mit einem Außengehäuse 12 und einer innerhalb des Außengehäuses 12 angeordneten Brennkammer 56, die pyrotechnisches, gaserzeugendes Material 58 enthält, wobei die Wandstärke der Bauteile des Außengehäuses 12 2,0 mm oder darunter beträgt.

Bevorzugt ist, das Außengehäuse 12 aus einem Diffusor 14 und einem Verschlusskörper 18 besteht, wobei Diffusor 14 und Verschlusskörper 18 vorzugsweise eine Schalenform aufweisen.

Bevorzugt ist, dass Diffusor 14 und Verschlusskörper 18 durch eine einzige festigkeitsbestimmende Verbindung aneinander befestigt sind, wobei die Verbindung insbesondere eine umlaufende Schweißnaht 22 zwischen Diffusor 14 und Verschlusskörper 18 ist.

Bevorzugt ist, dass die Wandstärke des Diffusors 14 höchstens 1,5 mm beträgt.

Bevorzugt ist, dass die Wandstärke des Verschlusskörpers 18 höchstens 1,9 mm beträgt.

Bevorzugt ist, dass bei der Aktivierung ein Brennkammerdruck von maximal 300 bar entwickelt wird.

Bevorzugt ist, dass die im Gasgenerator 10 vorgesehene Brennkammer 56 eine im Wesentlichen toroidale Form aufweist.

Gemäß einer Ausführungsform betrifft die Erfindung einen Gasgenerator 10, insbesondere für eine Schutzeinrichtung in einem Fahrzeug, mit einem Außengehäuse 12 und einer innerhalb des Außengehäuses 12 angeordneten Brennkammer 56, die pyrotechnisches, gaserzeugendes Material 58 enthält, wobei das Verhältnis des bei der Aktivierung des Gasgenerators 10 entstehenden maximalen Brennkammerdrucks zur Wandstärke des Außengehäuses 12 größer als 150 bar/mm und vorzugsweise kleiner 220 bar/mm ist.

Gemäß einer Ausführungsform betrifft die Erfindung einen Gasgenerator 10, insbesondere für eine Schutzeinrichtung in einem Fahrzeug, mit einem Außengehäuse 12, das mehrere Ausströmöffnungen 78 aufweist, und einer innerhalb des Außengehäuses 12 angeordneten Brennkammer 56, die pyrotechnisches, gaserzeugendes Material 58 enthält, wobei das Verhältnis der gesamten Ausströmfläche des Gasgenerators 10 zur minimalen und/ oder maximalen Wandstärke der Bauteile des Außengehäuses 12 größer als 30 mm, vorzugsweise größer als 34 mm ist.

Gemäß einer Ausführungsform betrifft die Erfindung einen Gasgenerator 10, insbesondere für eine Schutzeinrichtung in einem Fahrzeug, mit einem Außengehäuse 12, das einen Diffusor 14 mit einer im Wesentlichen zylindrischen Umfangswand 16 aufweist, und einer innerhalb des Außengehäuses 12 angeordneten Brennkammer 56, die pyrotechnisches, gaserzeugendes Material 58 enthält, wobei das Verhältnis des Durchmessers des Diffusors 14 zur kleinsten Wandstärke des Außengehäuses 12 kleiner als 50 ist, vorzugsweise zwischen 35 und 45 ist.

Gemäß einer Ausführungsform betrifft die Erfindung einen Gasgenerator 10, insbesondere für eine Schutzeinrichtung in einem Fahrzeug, mit einem Außengehäuse 12, das einen Diffusor 14 mit einer im Wesentlichen zylindrischen Umfangswand 16 aufweist, und einer innerhalb des Außengehäuses 12 angeordneten Brennkammer 56, die pyrotechnisches, gaserzeugendes Material 58 enthält, wobei das Verhältnis des Durchmessers des Diffusors 14 zur größten axialen Höhe des Gasgenerators 10 etwa 1,8 ± 0,2, vorzugsweise 1,8 ± 0,1 beträgt.

Gemäß einer Ausführungsform betrifft die Erfindung einen Gasgenerator 10, insbesondere für eine Schutzeinrichtung in einem Fahrzeug, mit einem Außengehäuse 12, das an seinem Außenumfang einen Flansch 24 aufweist, dadurch gekennzeichnet, dass der Flansch 24 geschlossen umläuft, vorzugsweise plan ist, und/ oder dass der Flansch 24 frei von Durchschrauböffnungen ausgebildet ist.

Gemäß einer Ausführungsform betrifft die Erfindung einen Gasgenerator 10, insbesondere für eine Schutzeinrichtung in einem Fahrzeug, mit einem Außengehäuse 12, das an seinem Außenumfang einen Flansch 24 aufweist, dadurch gekennzeichnet, dass der Flansch 24 geschlossen umläuft, vorzugsweise plan ist, und/ oder dass der Flansch 24 eine ringförmige Klemmfläche für den Gassack 96 mit einer Breite aufweist, die zwischen 5 und 12 %, vorzugsweise 8 bis 11 % des maximalen Durchmessers des Außengehäuses 12 beträgt.

Gemäß einer Ausführungsform betrifft die Erfindung einen Gasgenerator 10, insbesondere für eine Schutzeinrichtung in einem Fahrzeug, mit einem Außengehäuse 12, das an seinem Außenumfang einen Flansch 24 aufweist, dadurch gekennzeichnet, dass der Flansch 24 geschlossen umläuft, vorzugsweise plan ist, und/ oder dass der Flansch 24 eine ringförmige Klemmfläche für den Gassack 96 mit einer Breite aufweist, die zwischen 5 und 8,5 mm, vorzugsweise zwischen 5,5 und 7,5 mm liegt.

Gemäß einer Ausführungsform betrifft die Erfindung ein Gassackmodul 90, mit einem Gasgenerator 10, mit einem Außengehäuse 12, das an seinem Außenumfang einen Flansch 24 aufweist, einem Gassack 96 mit einer Einlassöffnung 98, die durch einen Öffnungsrand 100 definiert ist, und einem dem Flansch 24 gegenüberliegenden Klemmelement 104, das den Öffnungsrand 100 zwischen sich und dem Flansch 24 klemmt, wobei der Öffnungsrand 100 mit einer solchen Kraft geklemmt ist und die Klemmfläche so ausgelegt ist, dass die durch einen Maximaldruck im Gassack 96 auftretende seitliche Verschiebekraft am Öffnungsrand 100 zwischen 10 und 80 %, vorzugsweise 20 und 50 % geringer als die durch die Klemmkraft erzeugte Reibkraft zwischen Öffnungsrand 100 und Flansch 24 und Klemmelement 104 ist.

Gemäß einer Ausführungsform betrifft die Erfindung ein Gassackmodul 90, mit einem Gasgenerator 10, mit einem Außengehäuse 12, das an seinem Außenumfang einen Flansch 24 aufweist, einem Gassack 96 mit einer Einlassöffnung 98, die durch einen Öffnungsrand 100 definiert ist, und einem dem Flansch 24 gegenüberliegenden Klemmelement 104, das den Öffnungsrand 100 zwischen sich und dem Flansch 24 klemmt, wobei der Gasgenerator 10 im geklemmten Abschnitt des Öffnungsrandes 100 allenfalls eine oder mehrere Ausnehmungen, insbesondere ein Loch oder eine Kerbe, die zur Umfangspositionierung, insbesondere aber nicht zur Befestigung des Gasgenerators 10 an einem Modul dienen, aufweist.

Gemäß einer Ausführungsform betrifft die Erfindung einen Gasgenerator 10, insbesondere für eine Schutzeinrichtung in einem Fahrzeug mit einem Außengehäuse 12, das einen Diffusor 14 mit einer im Wesentlichen zylindrischen Umfangswand 16 mit mehreren Ausströmöffnungen 78 und einen Verschlusskörper 18 aufweist, der mit dem Diffusor 14 verschweißt ist, wobei Diffusor 14 und Verschlusskörper 18 vorzugsweise schalenförmig ausgebildet sind, und wobei die Ausströmöffnungen 78 auf der Innenseite des Diffusors 14 durch eine Verdämmung 84, vorzugsweise in Form einer Verdämmfolie, abgedeckt sind und die Verdämmung 84 vom innenseitigen Rand des Verschlusskörpers 18, insbesondere einer Schweißnaht 22, vorzugsweise Laserschweißnaht, zwischen Diffusor 14 und Verschlusskörper 18 beabstandet ist.

Bevorzugt ist, dass der Abstand größer 2 mm beträgt, vorzugsweise zwischen 2,5 und 7 mm, weiter vorzugsweise zwischen 3 und 5,5 mm liegt.

Bevorzugt ist, dass der Verschlusskörper 18 einen umlaufenden, hochstehenden Rand aufweist, an dem er mit dem Diffusor 14 verschweißt ist, und der kleinste Abstand der Schweißnaht 22 zur Verdämmung 84 wenigstens die im Anspruch 77 angegebenen Abstandswerte aufweist.

Gemäß einer Ausführungsform betrifft die Erfindung einen Gasgenerator 10, insbesondere für eine Schutzeinrichtung in einem Fahrzeug, mit einem Anzünder 28, der eine einen Kunststoff enthaltende Anzünderkappe 36 hat, und der wenigstens teilweise von einer Kunststoffumspritzung umgeben ist, wobei das Material der Anzünderkappe 36 und das Material der Kunststoffumspritzung so gewählt sind, dass während des Umspritzens die Anzünderkappe 36 wenigstens teilweise mit der Kunststoffumspritzung verschmilzt.

Bevorzugt ist, dass die Anzünderkappe 36 und die Kunststoffumspritzung aus dem gleichen Material bestehen.

Bevorzugt ist, dass der Kunststoff Glasfasern enthält.

Bevorzugt ist, der Glasfaseranteil etwa 20 bis 40 %, vorzugsweise etwa 30% beträgt.

Bevorzugt ist, dass der Gasgenerator 10 ein Außengehäuse 12 aufweist und der Anzünder 28 mittels der Kunststoffumspritzung mit dem Außengehäuse 12 verbunden ist.

Bevorzugt ist, das Außengehäuse 12 eine Öffnung 26 aufweist und die Kunststoffumspritzung an den Rand der Öffnung 26 angespritzt ist, insbesondere, um das Außengehäuse 12 nach außen abzuschließen.

Gemäß einer Ausführungsform betrifft die Erfindung einen Gasgenerator, insbesondere für ein Fahrzeuginsassen-Rückhaltesystem, mit einem ersten Bauteil 112 und einem zweiten Bauteil 114, das über einen gespritzten Kunststoffsockel 116 mit dem ersten Bauteil 112 verbunden ist, indem beide Bauteile 112, 114 wenigstens teilweise umspritzt sind, wobei das erste Bauteil 112 in einem Kontaktbereich 140 mit dem Kunststoffsockel 116 eine vor dem Spritzen aufgebrachte Klebefolie 142 aufweist.

Bevorzugt ist, das erste Bauteil 112 aus Metall, Keramik und/oder Kunststoff besteht.

Bevorzugt ist, dass das erste Bauteil 112 ein Gasgeneratorgehäuse ist oder ein Teilelement eines Gasgeneratorgehäuses bildet.

Bevorzugt ist, dass das zweite Bauteil 114 ein vorgefertigter, nach außen geschlossener Anzünder ist.

Bevorzugt ist, das erste Bauteil 112 eine Öffnung 120 zur Aufnahme und Befestigung des zweiten Bauteils 114 hat, deren Rand 122 beim Spritzen in den Kunststoffsockel 116 eingebettet wird.

Bevorzugt ist, die Klebefolie 142 nur einen Teil des umspritzten Abschnitts des ersten Bauteils 112 abdeckt.

Bevorzugt ist, die Klebefolie 142 den gesamten umspritzten Abschnitt des ersten Bauteils 112 abdeckt.

Bevorzugt ist, dass die Klebefolie 142 über den umspritzten Abschnitt des ersten Bauteils 112 hinausragt.

Bevorzugt ist, dass die Klebefolie 142 eine Kunststofffolie 144 und eine Klebstoffschicht 146 umfasst.

Bevorzugt ist, dass die Kunststofffolie 144 aus dem gleichen Material wie der Kunststoffsockel 116 besteht.

Bevorzugt ist, dass die Kunststofffolie 144 aus einem Material besteht, dass geeignet ist, eine Verbindung mit dem Material des Kunststoffsockels 116 einzugehen.

Bevorzugt ist, der Klebstoff der Klebstoffschicht 146 über einen vorbestimmten Anpressdruck oder thermische Einwirkung aktivierbar ist.

Bevorzugt ist, die Materialien von Kunststofffolie 144 und Kunststoffsockel 116 so gewählt sind, dass beim Spritzen des Kunststoffsockels 116 die Kunststofffolie 144 mit dem Kunststoffsockel 116 zumindest teilweise verschmilzt.

Bevorzugt ist, die Klebefolie 142, insbesondere die Klebstoffschicht 146, eine Haftbrücke zwischen dem ersten Bauteil 112 und dem Kunststoffsockel 116 bildet.

Bevorzugt ist, die Haftbrücke plastisch und/oder elastisch verformbar ist.

Bevorzugt ist, dass die Kunststofffolie 144 ein thermoplastisches Elastomer aufweist.

Es wird erfindungsgemäß ein Verfahren zur Herstellung eines Gasgenerators 10, insbesondere für ein Fahrzeuginsassen-Rückhaltesystem, vorgeschlagen mit folgenden Schritten: ein erstes Bauteil 112, das Metall und/oder Kunststoff und/oder Keramik enthält, wird bereitgestellt; ein mit dem ersten Bauteil 112 zu verbindendes zweites Bauteil 114 wird bereitgestellt; auf das erste Bauteil 112 wird in einem Verbindungsbereich eine Klebefolie 142 aufgebracht; das zweite Bauteil 114 wird relativ zum ersten Bauteil 112 positioniert; und das erste und das zweite Bauteil 112, 114 werden gemeinsam jeweils wenigstens teilweise umspritzt, wodurch ein die Bauteile 112, 114 verbindender Kunststoffsockel 16 gebildet wird.

Bevorzugt ist ein Schritt vorhanden, bei dem eine Kunststofffolie 144 der Klebefolie 142 beim Umspritzen mit dem Kunststoffsockel 116 verschmilzt.

Bevorzugt ist ein Schritt vorhanden, bei dem beim oder nach dem Aufbringen der Klebefolie 142 der Klebstoff der Klebefolie 142 durch Anpressen oder Erhitzen aktiviert wird.

Gemäß einer Ausführungsform betrifft die Erfindung ein Modul mit einem Gasgenerator 10, 110, einem von dem Gasgenerator 10, 110 aufblasbarem Gassack 96 und einer Befestigungseinrichtung zur Anbringung des Moduls, insbesondere im Innenbereich eines Fahrzeuges, wobei der Gasgenerator 10, 110 nach zumindest einer der zuvor beschriebenen Ausführungsformen ausgebildet ist.

## Patentansprüche

1. Gasgenerator (10), insbesondere für eine Schutzeinrichtung in einem Fahrzeug, mit einem Anzünder (28), der eine einen Kunststoff enthaltende Anzünderkappe (36) hat, und der wenigstens teilweise von einer Kunststoffumspritzung umgeben ist, wobei das Material der Anzünderkappe (36) und das Material der Kunststoffumspritzung so gewählt sind, dass während des Umspritzens die Anzünderkappe (36) wenigstens teilweise mit der Kunststoffumspritzung verschmilzt.

2. Gasgenerator (10) nach Anspruch 1, **dadurch gekennzeichnet, dass** die Anzünderkappe (36) und die Kunststoffumspritzung aus dem gleichen Material bestehen.

3. Gasgenerator (10) nach Anspruch 1 oder 2, **dadurch gekennzeichnet, dass** der Kunststoff Glasfasern enthält.

4. Gasgenerator (10) nach Anspruch 3, **dadurch gekennzeichnet, dass** der Glasfaseranteil etwa 20 bis 40 %, weiter vorzugsweise etwa 30% beträgt.

5. Gasgenerator (10) nach einem der voranstehenden Ansprüche, **dadurch gekennzeichnet, dass** der Gasgenerator (10) ein Außengehäuse (12) aufweist und der Anzünder (28) mittels der Kunststoffumspritzung mit dem Außengehäuse (12) verbunden ist.

6. Gasgenerator (10) nach Anspruch 5, **dadurch gekennzeichnet, dass** das Außengehäuse (12) eine Öffnung (26) aufweist und die Kunststoffumspritzung an den Rand der Öffnung (26) angespritzt ist, insbesondere, um das Außengehäuse (12) nach außen abzuschließen.

7. Modul mit einem Gasgenerator (10), einem von dem Gasgenerator (10) aufblasbarem Gassack (96) und einer Befestigungseinrichtung zur Anbringung des Moduls, insbesondere im Innenbereich eines Fahrzeuges, **dadurch gekennzeichnet, dass** der Gasgenerator (10) nach zumindest einem der Ansprüche 1 bis 6 ausgebildet oder hergestellt ist.
